# EUROPEAN PATENT SPECIFICATION

(11) **EP 3 109 735 B1**
(45) Date of publication and mention of the grant of the patent: **01.04.2020**
(21) Application number: 16170240.2
(22) Date of filing: 18.05.2016
(51) Int. Cl.: G06F 3/01, H04B 5/00, H04M 1/725

(54) **DEVICE AND METHOD OF OPERATING A CONTROLLABLE ELECTRONIC DEVICE**
VORRICHTUNG UND VERFAHREN ZUM BETRIEB EINER STEUERBAREN ELEKTRONISCHEN VORRICHTUNG
DISPOSITIF ET PROCÉDÉ D'EXPLOITATION D'UN DISPOSITIF ÉLECTRONIQUE CONTRÔLABLE

(30) Priority: 24.06.2015 US 201514748314
(43) Date of publication of application: 28.12.2016
(73) Proprietor: Intel IP Corporation, Santa Clara, CA 95054 (US)
(72) Inventor: ZHANG, Lei, 13100 Aix en Provence (FR)
(74) Representative: Viering, Jentschura & Partner mbB Patent- und Rechtsanwälte

(56) References cited:
- WO-A1-2008/010103
- US-A1- 2014 101 755
- US-A1- 2014 230 057
- US-A1- 2015 163 621

## Description

### Technical Field

Various embodiments relate generally to a device and a method operating a controllable electronic device.

### Background

Conventional smart devices, such as e.g. smartphones and tablets, primarily utilize virtual and physical buttons in order to enable a user to control the smart device. For example, a user may trigger different operations of a smart device such as "return/back", "return to home screen", "list recent activities/task" by pressing one or more buttons. A number of separate buttons are traditionally utilized to individually trigger each corresponding operation, such as a "home button" for triggering a return to home screen or a "back button" for returning to a previous screen. Sequences of button presses may also be predefined in order to trigger an operation of the smart device, such as pressing virtual buttons on one or more displayed menu screens in order to navigate through virtual screens of a smart device and to trigger one or more related operations.

US 2015/0163621 A1 (D1) relates to a method of controlling a computerized device, specifically a printer, by using a second device, specifically a mobile phone, by means of NFC communication. A NFC receiver in the computerized device detects a pattern of taps made with the second device, e.g. the mobile phone. A processor of the computerized device automatically interprets the pattern of taps as a command from a plurality of commands. Functional elements of the computerized device automatically perform an operation corresponding to the command to fully execute the command based only on the pattern of taps. Each tap comprises a distance between the computerized device and the mobile phone changing from a first distance to a second distance and returning to at least the first distance within a pre-determined period of time.

US 2014/0230057 A1 (D2) relates to a system to provide an always-on embedded anti-theft protection for platform is described. The system comprises a storage including encryption to protect data, a risk behavior logic to detect a potential problem when the data is not encrypted, a core logic component to provide logic to analyze the potential problem and to trigger a security action logic to perform a security action, when the potential problem indicates a theft suspicion, and the security action logic, to cause the platform to attempt a transition to a reduced power state when triggered by the core logic component, the transition causing the data to be encrypted. The system may be armed or disarmed using NFC communication, see Fig. 19 of D2. The NFC chip used to arm or disarm the system may be in the user's badge, in the user's mobile phone, a tag that may be attached to a keychain, on a sticker that may be attached to something the user habitually carries such as a badge or telephone, see par. 150 of D2.

US 2014/0101755 A1 (D3) relates to a wearable near field communication device and a mobile wireless communication device including a processor capable of switching from a security mode to a normal mode upon a sensor of the wearable near field communication device sensing positioning adjacent to a hand and a second NFC transceiver of the mobile wireless communication device establishing NFC communication with a first NFC transceiver of the wearable near field communication device.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
FIG. 1 shows an exemplary near field communication (NFC) accessory;
FIG. 2 shows various components and circuits of an NFC-enabled smart device and an NFC accessory;
FIG. 3 shows a flow diagram illustrating an NFC-based smart device control process;
FIG. 4 shows a flow diagram further illustrating the NFC-based smart device control process of FIG. 3;
FIG. 5 shows a digital waveform representations of a number of NFC accessory movements;
FIG. 6 shows positioning scenarios of an NFC accessory relative to an NFC-enabled smart device;
FIG. 7 shows several digital waveforms illustrating an active-delay mechanism for NFC-based smart device control;
FIG. 8 shows a flow diagram illustrating a further NFC-based smart device control process using an active-delay mechanism;
FIG. 9 shows a flow diagram illustrating a method for controlling an NFC-enabled smart device according to an aspect of the disclosure;
FIG. 10 shows a flow diagram illustrating a method for controlling a smart device according to a further aspect of the disclosure;
FIG. 11 shows a block diagram illustrating internal components of core hardware of a smart device; and
FIG. 12 shows a flow diagram illustrating a method for operating a controllable electronic device.

### Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

As used herein, a "circuit" may be understood as any kind of a logic implementing entity, which may be special purpose circuitry or a processor executing software stored in a memory, firmware, or any combination thereof. Furthermore, a "circuit" may be a hard-wired logic circuit or a programmable logic circuit such as a programmable processor, for example a microprocessor (for example a Complex Instruction Set Computer (CISC) processor or a Reduced Instruction Set Computer (RISC) processor). A "circuit" may also be a processor executing software, for example any kind of computer program, for example a computer program using a virtual machine code such as for example Java. Any other kind of implementation of the respective functions which will be described in more detail below may also be understood as a "circuit". It may also be understood that any two (or more) of the described circuits may be combined into one circuit.

The incorporation of Near Field Communication (NFC) technology has become commonplace in many new smart phone and tablet products. This NFC technology has been conventionally deployed to exchange basic data between two NFC terminals, such as between an NFC-enabled smart device and an NFC accessory, such as e.g. a ring, key fob, wearable device with an NFC inlay, or other similar NFC accessories. Such NFC accessories may be conventionally used to trigger an operation on a smart device, such as initiating a phone call to a preselected contact, enabling external services such as e.g. Wireless Fidelity (WiFi) or Bluetooth, or locking a device. For example, a user may position an NFC accessory within the NFC field range of an NFC-enabled smart device. The NFC-enabled smart device may identify the NFC accessory (such as by reading identification information or other stored data provided wirelessly by the NFC accessory over), and may trigger a predefined smart device operation upon identification of an eligible NFC accessory. A user may thus predefine a smart device to execute a selected operation in response to identifying a certain NFC accessory, and may even program a smart device to execute a different operation in response to identification of each of a number of different NFC accessories.

However, these conventional use cases for NFC accessories and NFC-enabled smart devices may be limited by the detection of static content of an NFC accessory. In other words, current NFC-enabled smart devices may simply identify the presence of a recognized NFC accessory and trigger a single predefined operation. It may thus not be possible to perform different operations with a single NFC accessory without re-programming the NFC smart device every time to perform a different operation in response to a subsequent detection of the NFC accessory. The degree of control offered by existing NFC use cases is therefore limited.

Accordingly, it may be desirable to dynamically expand the capability of NFC interactions between NFC-enabled devices (e.g. an NFC-enabled smart device and NFC accessory) by allowing a single NFC accessory to trigger multiple different operations of a proximate NFC-enabled smart device, such as e.g. by detecting spatial movements of an NFC accessory relative to an NFC-enabled smart device.

Such an improvement may be particularly desirable in providing a degree of control to a user for operating a smart device. As previously detailed, smart devices are conventionally controlled by button press(es), such as either physical buttons distributed on the surface of a smart device or virtual buttons displayed on an interactive display screen. Due to the spatial distribution of buttons across the smart device, it may be unnecessarily inconvenient for a user to control a smart device with a single hand. This problem may be accentuated for the use of larger devices, such as tablets and larger smartphones, where re-handling of the smart device or use of two hands may be necessary in order for a user to access the desired buttons. Furthermore, certain buttons such as the "home button" or "function button" may be utilized by a user at a substantially high rate, which may potentially lead to potential damage due to over-usage.

Accordingly, it may be possible to provide an enhanced user experience by offering the user with an alternative method to control a smart device in the form of enhanced NFC-based smart device control. While the above-detailed existing NFC-based approaches may be used to trigger certain smart device operations, the use cases are severely limited. In particular, conventional NFC-based smart device control only allows a single smart device operation to be programmed to an NFC accessory at one time, and accordingly a single NFC accessory may only be capable of triggering a single operation of an NFC-enabled smart device. A user may thus need to re-program an NFC device every time to perform a different operation in response to the same NFC accessory, which may severely restrict the usefulness of NFC-based smart device control.

In contrast, NFC-based smart device control may utilize timing information associated with detection of an NFC accessory by an NFC-enabled smart device in order to recognize different spatial movement patterns of the NFC accessory relative to the NFC-enabled smart device. In doing so, an NFC-enabled smart device may be capable of triggering a variety of different movements by detecting distinct spatial movement patterns, herein also referred to as NFC movements, of a proximate NFC accessory.

NFC-enabled smart devices may conventionally operate by constantly monitoring for the presence of NFC-enabled devices such as NFC accessories. NFC-enabled smart devices may thus have a finite NFC field range that dictates how proximate an NFC accessory must be in order to be successfully detected by the NFC-enabled smart device. An NFC-enabled smart device may detect the presence of an NFC accessory that has entered the detection range, and may proceed to identify the detected NFC accessory, such as by extracting NFC identification information from an NFC signal received from the detected NFC accessory. The NFC-enabled smart device may then compare the identity of the detected NFC accessory to a database in order to determine whether an operation has been associated with the detected NFC accessory and may proceed to perform an associated operation in the event that an operation has been previously associated with the detected NFC accessory.

Existing NFC-based smart device control approaches may thus be based solely on identifying whether or not a predefined NFC accessory is in range, and performing a single operation associated with identification information of the NFC accessory if the NFC accessory is in range. In contrast, an improved NFC-enabled smart device may be configured to assess the timing associated with the detection of an NFC accessory. In other words, the temporal variance of an NFC accessory between a detected state (i.e. within the detection range of an NFC-enabled smart device) and an undetected state (i.e. out of range of an NFC-enabled smart device) caused by the user moving the NFC accessory may be used to trigger one or more different operations of the smart device.

An NFC-enabled smart device may monitor the varying NFC detection state (i.e. detected or undetected) of an NFC accessory in terms of time in order to recognize a variety of spatial movement patterns, referred to herein as either "NFC movements" or simply "movements". These movements may be characterized by timing information associated with state changes in detection state, such as by one or more timestamps indicating detected or undetected state. The NFC-enabled smart device may then trigger a variety of different operations based on the particular detected movement of the NFC accessory. In this manner, a user may be able to control an NFC-enabled smart device with an NFC accessory to perform a variety of different operations, thus offering a distinct advantage over the existing NFC use cases that may only support a single operation per NFC accessory. A user may thus be given greater control over an NFC-enabled smart device while reducing the number of operations that explicitly require a button press, thereby contributing to an improved user experience.

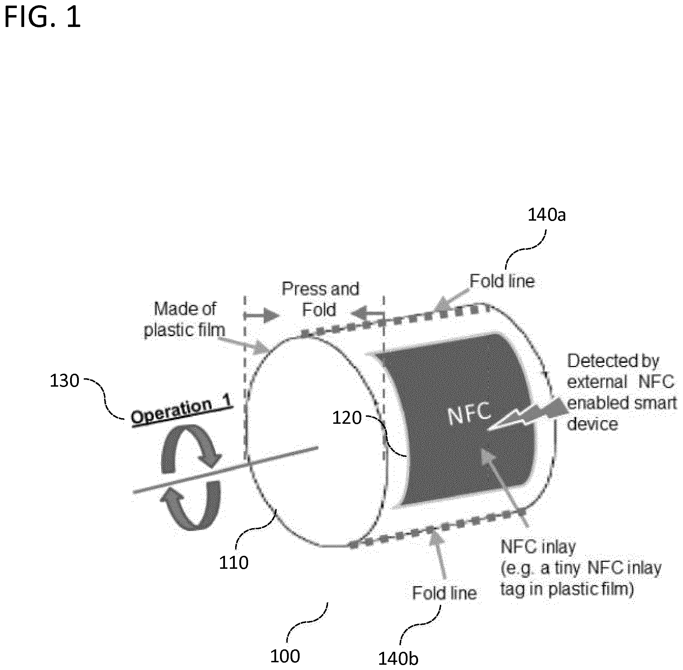

FIG. **1** shows an exemplary NFC accessory **100.** As shown in FIG. **1****,** NFC accessory **100** may be formed in the shape of a ring and be made of material **110,** which may be light and foldable, such as e.g. plastic film. NFC accessory **100** may be provided with NFC inlay **120,** which may integrated into material **110** and may be detectable by an external NFC-enabled smart device using NFC signaling. NFC accessory **100** may be worn on a fingertip or middle part of a user's finger. A proximate NFC-enabled smart device may detect NFC inlay **120** if the user positions their finger within the NFC field range of the proximate NFC-enabled smart device, and may subsequently attempt to identify NFC accessory **100** based on identification information provided by NFC inlay **120.** An NFC-enabled device may detect the absence of NFC accessory **100,** i.e. be aware of the absence of NFC accessory **100,** if a user wearing NFC accessory **100** moves their finger out of the NFC field range.

An NFC-enabled smart device may accordingly be in either *NFC_Detection_Active* state or *NFC_Detection_Inactive* state based on whether or not an NFC accessory, such as NFC accessory **100,** is within the NFC field range of an NFC-enabled smart device following certain spatial movements of NFC accessory **100** relative to an NFC-enabled device, e.g. according to the movement of a user's finger equipped with NFC accessory **100.** The NFC detection state of an NFC-enabled smart device may vary from *NFC_Detection_Inactive* to *NFC_Detection_Active,* and then back to *NFC_Detection_Inactive* state as the user moves NFC accessory **100** into and out of the NFC field range, such as e.g. with finger movements.

A user may typically hold their forefinger near the back of a smart device, and may be free to move their forefinger along the back of the smart device in addition to bending and unbending their forefinger, thereby bringing their finger closer to and further away from the back of a smart device. A user may therefore utilize such finger movements to make NFC accessory **100** enter or exit the NFC field range of an NFC-enabled smart device, i.e. move NFC accessory **100** into and out of the NFC field range of an NFC-enabled smart device, which as a result may trigger *NFC_Detection_Active* or *NFC_Detection_Inactive* state of the NFC-enabled smart device. Different sequences of *NFC_Detection_Active* and *NFC_Detection_Inactive* state, defined by timing information (such as e.g. timestamps) representing state transitions, may then be captured by an NFC-enabled smart device and used to trigger a pre-defined smart device operation.

NFC accessory **100** may be rotated on a user's figure (shown as shown by *Operation_1* **130**) in order to alter the emitted NFC field strength by NFC accessory **100.** For example, a user may increase the emitted NFC field strength relative to a proximate NFC-enabled smart device by rotating their finger such that NFC inlay **120** is closer to and/or facing an NFC antenna provided on the NFC-enabled smart device. NFC accessory **100** may be more easily detected by the NFC-enabled smart device when in this position, and accordingly the NFC-enabled smart device may be more prone to detect NFC accessory **100** and enter *NFC_Detection_Active* state. Similarly, a user may rotate NFC accessory **100** on their finger to be turned sideways relative to the NFC field associated with the NFC antenna provided on the NFC-enabled smart device in order to make NFC accessory **100** less prone for detection by the NFC-enabled smart device, and thus more likely for the NFC-enabled smart device to be in *NFC_Detection_Inactive* state.

NFC accessory **100** may be folded along the fold lines **140a** and **140b,** such as to prepare NFC accessory **100** for storage. The thickness of NFC accessory **100** may be substantially negligible when folded, and thus may be easily stored in a wallet, pocket, desk, or even in a dedicated slot on a smart device similar to those provided for styluses.

The detection state of NFC accessory **100** relative to a proximate NFC-enabled smart device may vary based on the position of NFC accessory **100** relative to the NFC-enabled smart device. NFC-enabled smart devices may constantly monitor for NFC accessories within NFC field range, and subsequently may determine if an NFC accessory is within NFC field range or outside of NFC field range.

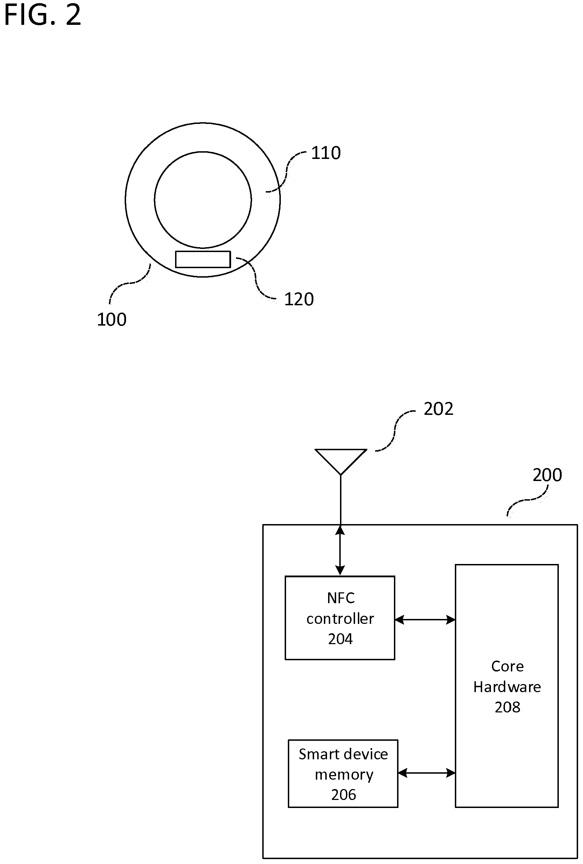

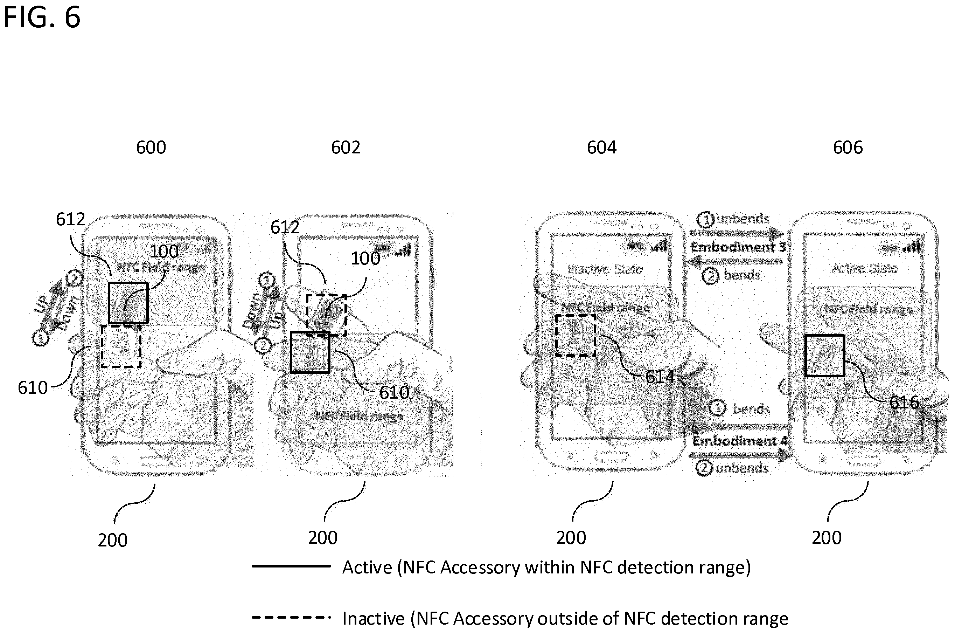

FIG. **2** illustrates an exemplary scenario in which NFC accessory **100** is proximate to smart device **200.** It is appreciated that the illustrated spatial positioning of NFC accessory **100** relative to smart device **200** is exemplary, and that NFC accessory **100** may conventionally be located along the back of smart device **200** (as will be described regarding FIG. **6**). Smart device **200** may be NFC-enabled, and may be e.g. a smartphone or a tablet. Smart device **200** may include NFC antenna **202,** NFC controller **204,** smart device memory **206,** and core hardware **208.** The aforementioned circuitry and hardware (such as NFC controller **204,** smart device memory **206,** and core hardware **208**) may be implemented as separated circuits, e.g. such as separate integrated circuits as illustrated in FIG. **2****.** It is understood that some or all of the circuits may be implemented by a common programmable processor, such as e.g. a microprocessor. Accordingly, some or all of the functionality of the one or more aforementioned circuitry may be consolidated into a single hardware component. It is also understood that smart device **200** may include a number of additional components, including hardware, processors, memory, and other specialty or generic hardware/processors/circuits, etc., in order to support a variety of additional operations of wireless radio communications. Smart device **200** may also include a variety of user input/output devices such as displays, keypads, touchscreens, speakers, external buttons, etc.

Smart device **200** may be provided with NFC-dedicated components NFC antenna **202** and NFC controller **204** in order to support NFC functionality. In addition to the aforementioned NFC-specific components, smart device **200** may be provided with core hardware **208** in order to support various functionalities associated with conventional smart device operation, such as executing software components and applications, accepting inputted user data, providing a user with multimedia content, etc. Core hardware **208** may thus be e.g. a core central processing unit (CPU) responsible for a substantial degree of control over smart device **200.** Smart device **200** may be provided with one or more additional antennas or antenna arrays, such as antennas for transmission and/or reception of wireless radio signals associated with cellular communications or other radio access networks. As shown in FIG. **2****,** NFC controller **204** is capable of interacting with core hardware **208.**

As will be described, smart device **200** may therefore include a near field communication antenna (antenna **202**) configured to detect an external near field communication device. Smart device **200** may also include a processor (core hardware **208**) configured to pilot NFC controller 204 to detect a change in detection state of the smart device from a first detection state to a second detection state, wherein the change in detection state of the smart device is based on whether the near field communication antenna detects the external near field communication device, determine a duration of a first time period during which the smart device remains in the second detection state, and trigger a predefined action of the smart device based on at least the duration of the first time period. Smart device **200** may additionally a memory (NFC smart device memory **206**).

In another aspect of the disclosure, the processor (core hardware **208**) may be configured to monitor a series of one or more transitions in a detection state of the smart device between a first detection state and a second detection state based on whether the near field communication antenna detects the near field communication device, perform a comparison between first timing information associated with the series of one or more transitions and second timing information associated with predefined series of one or more transitions, and trigger a predefined action of the smart device based on the comparison. As will be described, the first and second timing information may be based on e.g. timestamps or durations of time.

In a further aspect of the disclosure, the processor (core hardware **208**) may be configured to detect a transition in detection state of the smart device from a first detection state to a second detection state, wherein the detection state of the smart device is based on whether the near field communication antenna detects the external near field communication device, control the smart device to operate according to a first operation mode during a first time period before the transition in which the smart device remains in the first detection state, and control the smart device to operate according to a second operation mode during a second time period after the transition once the smart device transitions from the first detection state to the second detection state. As will be described, the first operation mode and the second operation mode may be a predefined operation mode of the smart device, such as e.g. text entry modes, virtual window scrolling modes, and/or copy/paste modes.

Smart device **200** may thus be capable of interacting with NFC accessories such as NFC accessory **100** using NFC antenna **202,** NFC controller **204,** and smart device memory **206.** For example, NFC controller **204** may be configured to detect the presence of NFC accessory **100** within NFC field range using NFC antenna **202.** As previously detailed, NFC controller **204** may be configured to interact with core hardware **208.** Core hardware **208** may thus be configured to interact with NFC controller **204** in order to monitor whether or not NFC controller **204** detects an NFC accessory such as NFC accessory **100.**

For example, core hardware **208** may be configured to execute software, such as e.g. software stored in smart device memory **206.** Core hardware **208** may thus be configured to execute one or more software routines based on NFC applications, which may e.g. include software routines configured to interact with NFC controller **204** to control various operations of smart device **200** based on whether NFC controller **204** detects the presence of an NFC accessory such as e.g. NFC accessory **100.**

Core hardware **208** may thus be configured interact with NFC controller **204** in order to determine whether or not NFC controller **204** detects an NFC accessory, such as e.g. according to one or more software routines stored in smart device memory **206.** Core hardware **208** may additionally be configured to determine timing information associated with changes in detection state of an NFC accessory in addition to identification information of a detected NFC accessory through interactions with NFC controller **204.** It is appreciated that such functionality involving timing and identification information determination may be implemented in a number of different ways, such as by determining timing and/or identification information solely in NFC controller **204** and providing such information to core hardware **208.** Alternatively, such functionality may be implemented in part by both NFC controller **204** and core hardware **208,** or may be substantially implemented in core hardware **208** based on raw information provided by NFC controller **204.**

Core hardware **208** may thus determine an NFC detection state based on the data/responses received from NFC controller **204,** such as data indicating whether or not NFC accessory **100** is within NFC field range., i.e. is detected by NFC controller **204.** Core hardware **208** then may enter *NFC_Detection_Active* state if NFC controller **204** indicates that NFC accessory **100** is within NFC field range, i.e. is detectable, which may be on a software level as executed by core hardware **208.** Core hardware **208** may additionally be configured to determine a point in time in which NFC accessory **100** enters NFC field range, such as e.g. a time stamp or similar timing information, which may be based on data provided by NFC controller **204.**

Similarly, core hardware **208** may be able to determine if NFC accessory **100** is outside of NFC field range based on data/responses received from NFC controller **204.** Core hardware **208** may additionally be able to determine a point in time when NFC accessory **100** exits NFC field range after being within NFC field range, which may be e.g. in the form of a timestamp and similarly based on data received from NFC controller **204.** Core hardware **208** may then enter *NFC_Detection_Inactive* state, which as previously detailed regarding *NFC_Detection_Active* state may be on a software level as executed by core hardware **208.**

It is appreciated that for purposes of explanation, smart device **200** may similarly be considered to in *NFC_Detection_Active* or *NFC_Detection_Inactive* state in accordance with detection state held by core hardware **208** at a given point in time. It is thus understood that references to smart device **200** being in a particular detection state corresponds to core hardware **208** also being in the same particular detection state, such as e.g. dictated on a software level within core hardware **208.** Similarly, it is understood that references to core hardware **208** being in a particular detection state corresponds to smart device **200** also being in the same particular detection state.

Likewise, it is appreciated that references to smart device **200** performing a particular operation refer to core hardware **208** performing the particular operation, such as by executing one or more software routines to perform the particular operation.

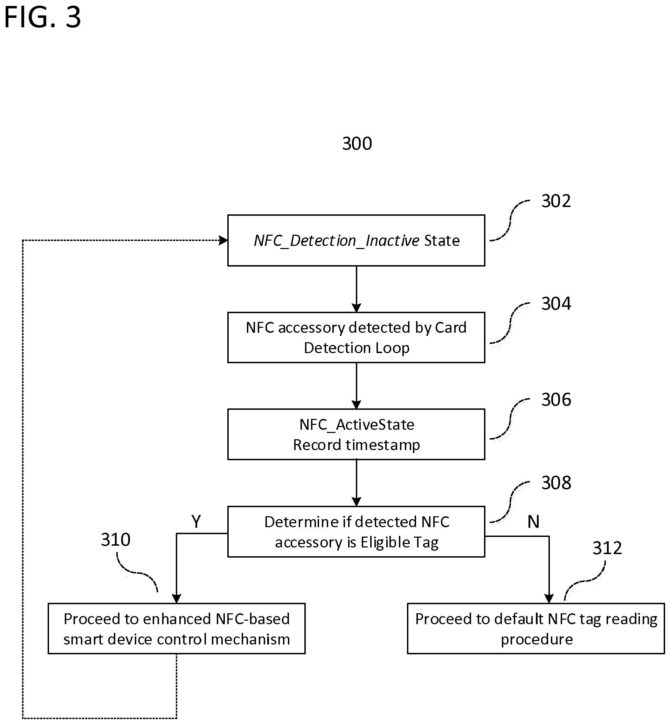

FIG. **3** illustrates an exemplary process **300** which smart device **200** may execute. As previously detailed, smart device **200** may include NFC controller **204** and core hardware **208,** which in conjunction may be configured to control detection, identification, and communication with NFC devices. Smart device **200** may begin in *NFC_Detection_Inactive* state in **302.** NFC controller **204** may be in an "NFC polling mode" and enable an "NFC Card Detection Loop" to detect precisely when an NFC accessory, such as NFC accessory **100,** enters the NFC field range of the smart device **200.** The NFC Card Detection Loop may be implemented at a firmware level within NFC controller **204,** and may be configured by the original equipment manufacturer of smart device **200.** The NFC Card Detection Loop may operate on a millisecond scale, such as 50 ms or 100 ms, which may be configurable via an upper software level such as an Application Program Interface (API).

NFC accessory **100** may move into NFC field range of smart device **200,** such as e.g. due to a user performing a finger movement with a finger equipped with NFC accessory **100.** For example, the user may slide their finger equipped with NFC accessory **100** from an initial location outside of NFC field range to another location inside of NFC field range. Alternatively, the user may straighten their finger from a bent position such that NFC accessory **100** moves from an initial location outside of NFC field range to another location inside of NFC field range. NFC controller **204** may thus be able to detect an NFC signal emitted from NFC inlay **120** of NFC accessory **100,** and thus may detect the NFC accessory in **304** of method **300.** NFC controller **204** may then exchange an initial command/answer (i.e. NFC Technology detection phase, Collision resolution phase, and Activation phase) with NFC accessory **100.** Smart device **200** may then enter into *NFC_Detection_Active* state in **306** by receiving a notification from the firmware layer (i.e. Activate Notification), and may record a timestamp signifying the point in time which NFC accessory **100** was detected by smart device **200,** which may e.g. be executed by core hardware **208.** The timestamp may thus indicate the time during which NFC device 200 entered *NFC_Detection_Active* state, and may accordingly be used by core hardware **208** to identify user movements of NFC accessory **100** in order to trigger a variety of smart device operations.

In contrast to conventional use cases for NFC, smart device **200** may be configured to trigger multiple operations with a single NFC accessory without constant re-programming. However, smart device **200** may additionally be configured to support the aforementioned conventional use cases for NFC in addition to the enhanced NFC-based smart device control described herein.

Smart device **200** may rely on identification information in order to determine whether to operate according to the conventional NFC use cases or according to enhanced NFC-based smart device control. After entering *NFC_Detection_Active* state and recording a timestamp to indicate entry into *NFC_Detection_Active* state, smart device **200** may attempt to identify NFC accessory **100** by reading information provided by NFC accessory **100,** which may be e.g. performed by NFC controller **204.** For example, NFC controller **204** may read the Unique Identification Number (UID) provided by NFC accessory **100,** such as e.g. from a memory provided in NFC inlay **120.** NFC controller **204** may additionally read block data provided by NFC accessory **100** or may read an NFC Data Exchange Format (NDEF) message provided by NFC accessory **100.** NFC controller **204** may be configured to determine which information provided by NFC accessory **100** should be read, and may then perform the associated reading operation in several milliseconds. NFC controller **204** may then proceed to determine whether or not NFC accessory **100** has been pre-configured to operate according to enhanced NFC-based smart device control protocols in **308. 308** may thus include determining if NFC accessory **100** is an Eligible Tag (i.e. eligible NFC accessory), i.e. has been pre-configured to trigger enhanced NFC-based smart device control. If NFC accessory **100** is an Eligible Tag, method **300** may proceed to enhanced NFC-based smart device control mechanism in **310,** i.e. may proceed to implement smart device control based on NFC movements according to aspects of this disclosure provided herein. If NFC accessory **100** is not an Eligible Tag, method **300** may instead proceed to default NFC tag reading procedure in **312.** Default NFC tag reading procedure may include the aforementioned conventional NFC accessory protocols, such as e.g. triggering a single smart device operation based on the identity of NFC accessory **100** or a normal NFC tag -reading procedure as implemented in conventional Android systems..

The proposed enhanced NFC-based smart device control mechanism of **310** may therefore not interfere with existing NFC-based solutions, such as normal NFC tag reading or the triggering of a single smart device operation based on the identity of a detected NFC accessory. If the detected NFC accessory has been preconfigured for enhanced NFC-based smart device control (such as e.g. by a user, vendor, manufacturer, etc.), the detection and identification of an eligible NFC accessory (i.e. the NFC accessory is an Eligible Tag) may trigger enhanced NFC-based smart device control. Otherwise, default NFC protocols may instead be performed, such as default reading of NFC tag information and any other configured operations.

As depicted in FIG. **3****,** method **300** may be implemented in a repetitive manner. After smart device **200** has executed the enhanced NFC-based smart device control mechanism in **310,** method **300** may return to *NFC_Detection_Inactive* state in **302.**

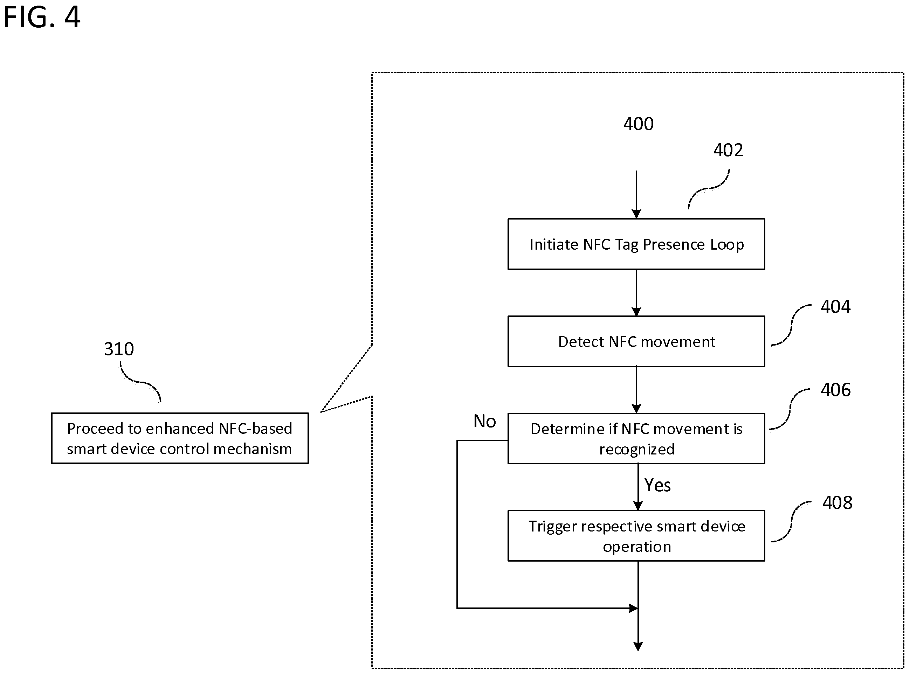

FIG. **4** shows method **400** detailing enhanced NFC-based smart device control according an aspect of the disclosure. As detailed regarding method **300,** NFC controller **204** of smart device **200** may detect the presence of an NFC accessory such as NFC accessory **100** within the NFC field range of smart device **200.** NFC controller **204** may identify NFC accessory **100** based on emitted NFC information, and may then determine whether or not NFC accessory **100** is an Eligible Tag and should be interacted with according to enhanced NFC-based smart device control protocols, such as in **310** of method **300.** As indicated in FIG. **4****,** it is appreciated that method **400** may be executed as part or all of the enhanced NFC-based smart device control mechanism of **310** in method **300.**

If NFC accessory **100** is an Eligible Tag (i.e. as determined in **308** and **310** of method **300**), NFC controller **204** may proceed according to method **400.** Smart device **200** may initiate NFC Tag Presence Loop **402** via NFC controller **204,** during which smart device **200** may continuously monitor whether or not NFC accessory **100** remains within the NFC field range of smart device **200** as detected by NFC controller **204.** NFC Tag Presence Loop **402** may be implemented at a software level (e.g. a framework layer in an Android operating system), and may have a loop interval configurable in an order of milliseconds, such as e.g. 60, 80, or 125 ms.

By monitoring whether NFC accessory **100** is within NFC field range, NFC Tag Presence Loop **402** may detect NFC movements based on timing information. Smart device **200** may record a timestamp each time NFC accessory **100** either exits or re-enters NFC field range, thereby triggering NFC controller **204** to be in *NFC_Detection_Active* state (NFC accessory **100** within range) or *NFC_Detection_Inactive* state (NFC accessory **100** out of range). A series of timestamps associated with *NFC_Detection_Active* and *NFC_Detection_Inactive* state may be utilized to represent an NFC movement. The initial timestamp recorded in **306** of method **300** may also be utilized as a movement timestamp. NFC controller **200** may then compare the series of timestamps representing a performed user movement to one or more predefined series of timestamps representing predefined user movements. NFC controller **200** may then determine whether the series of timestamps matches with one of the predefined series of timestamps, and may perform a predefined action associated with the represented predefined user movement.

A user may therefore define NFC movements composed of time periods in which NFC accessory **100** is within NFC field range of smart device **200** and in which NFC accessory **100** is outside of NFC field range, and may assign a specific smart device operation to each NFC movement. A user may then perform the associated movement by moving NFC accessory **100** into and out of NFC field range of smart device **200** in a manner that matches to one of the predefined movements in order to trigger an associated operation of smart device **200.** As numerous different movements can be made with a single NFC accessory, each NFC accessory can be utilized to trigger a plurality of different movements. Unlike conventional NFC-based smart device control, a user may be able to exert greater control over smart device **200** without the use of conventional buttons.

Smart device **200** may therefore detect an NFC movement in **404** by recording timestamps in which NFC accessory **100** moves into NFC field range (triggering *NFC_Detection_Active* state) and out of NFC field range (triggering *NFC_Detection_Inactive* state). Smart device **200** may determine if the NFC movement is recognized based on the recorded timestamps, i.e. if the performed NFC movement matches a preconfigured/preprogrammed NFC movement based on the recorded timestamps. Smart device **200** may determine if the NFC movement is recognized by comparing the NFC movement to a database of NFC movements, such as stored in smart device memory **206** of smart device **200.**

It is appreciated that the aforementioned database of NFC movements may be implemented by smart device **200** in a variety of alternate manners, such as a waveform database, movement database, time stamp data base, time duration/window database, etc. It is thus appreciated that numerous approaches to compare detected NFC movements to the database of NFC movements may be similarly available and accordingly embraced herein by this disclosure. It is understood that substantially all such movement comparison approaches may involve a certain degree of comparison of timing information, especially a duration of time as manifested by any plurality of points of time, due to the inherent relationship all temporal time waveforms have with time.

Smart device **200** may be configured to recognize NFC movements by comparing timing characteristics of a detected NFC movement to one or more predefined NFC movements. As previously detailed, smart device **200** may record timestamps, e.g. as performed by core hardware **208** via one or more software levels based on data provided by NFC controller **204,** indicated *NFC_Detection_Active* and *NFC_Detection_Inactive* state. Smart device **200** may then compare the recorded timestamps to a database of predefined NFC movements, where each of the predefined NFC movements is also associated with one or more timestamps. Smart device **200** may calculate a duration of time in which NFC accessory **100** is within NFC field range (*NFC_Detection_Active*) or calculate a duration of time in which the NFC accessory **100** is outside of NFC field range (*NFC_Detection_Inactive*), such as based on the recorded timestamps, and may then compare the calculated duration of time to durations of time associated with the predefined NFC movements. It is appreciated that such a "duration" as used herein may additionally include comparing two distinct points in time, as a duration in time inherently exists between two such points. Smart device **200** may therefore determine if the NFC movement is recognized based on the comparison between the detected NFC movement and the predefined NFC movements.

Upon detecting an NFC movement and determining a series of timestamps indicating NFC detection state transitions representing the detected NFC movement, smart device **200** may access smart device memory **206,** e.g. in the form of core hardware **208** accessing smart device memory **206.** NFC device **200** may obtain timing information associated with one or more predefined NFC movements stored in smart device memory **206.** For example, the timing information may include a series of timestamps or durations of time periods (such as e.g. in the form of timestamps) corresponding to *NFC_Detection_Active* and *NFC_Detection_Inactive* state. Smart device **200** may then compare the timing information associated with the detected NFC movement to the timing information stored in smart device memory **206** associated with the one or more predefined NFC movements. Smart device memory **206** may additionally contain information associating each of the predefined NFC movements with one or more smart device operations. Smart device **200** may then identify a predefined NFC movement that matches with the detected NFC movement based on the comparison of timing information, and then may perform a smart device action associated with predefined NFC movement.

If the NFC movement is not recognized in **406,** smart device **200** may ignore the current detected movement and return to *NFC_Detection_Inactive,* i.e. to **302** in method **300.** Alternatively, if the NFC movement is recognized, smart device **200** may trigger a respective smart device operation. For example, a user may have pre-programmed a smart device operation, such as "return to home screen", "back/previous screen", etc., to match a particular NFC movement. Upon recognizing the particular NFC movement in **408,** smart device **200** may trigger the associated smart device operation.

Core hardware **208** may be configured to trigger the associated smart device operation of smart device **200.** Upon recognizing an NFC movement and identifying a corresponding smart device operation, core hardware **208** may then perform the proper smart device operation, such as by interacting with one or more further components of smart device **200** dependent on the requirements of the corresponding smart device operation.. For example, a user may produce an NFC movement matched with a "return to home screen" operation of smart device **200.** Core hardware **208** may then perform a "return to home screen operation", i.e. by changing a display screen of smart device **200** to a home screen, thereby interacting the display screen in order to complete the operation associated with the detected NFC movement. Alternatively, a user may produce an NFC movement matched with a camera operation, such as "take picture". Core hardware **208** may then perform a "take picture" operation, such as by interacting with a camera of smart device **200** to take a picture.

A variety of different NFC movements may be possible, and may each be defined by a series of timestamps representing times when a proximate NFC accessory entered into NFC field range or exited NFC field range. The series of timestamps indicating *NFC_Detection_Active* and *NFC_Detection_Inactive* state, respectively, may be represented as a digital waveform representing an NFC movement. For example, *NFC_Detection_Active* may represent a high level digital signal in the digital waveform, while *NFC_Detection_Inactive* may represent a low level digital signal in the digital waveform. Each NFC movement may thus be visually represented with a separate digital waveform composed of high level (*NFC_Detection_Active,* i.e. NFC accessory within NFC field range) and low level (*NFC_Detection_Inactive,* i.e. NFC accessory outside of NFC field range) time periods. Each NFC accessory may be associated with any number of separate waveforms, and consequently a number of different operations (e.g. each corresponding to distinct a waveform/movement) may be triggered by each NFC accessory. As the NFC controller **204** may be capable of detecting a UID for each NFC accessory, NFC movements may be re-used between different NFC accessories, and may be configured to trigger the same or different smart device operations. It is appreciated that such variation may be configured or programmed according to user preference or may be implemented by a manufacturer.

As previously detailed, such movements defined by multiple timestamps may be inherently associated with durations, e.g. durations of time representing the time between time stamps. Additionally, it is appreciated that even a single time stamp may entail a duration, as a duration may be determined based on the time following the timestamp, thereby representing the time spent in *NFC_Detection_Active* or *NFC_Detection_Active* state following a transition into the state. It is thus understood that related time waveforms are recognized herein as inherently being characterized by at least one duration.

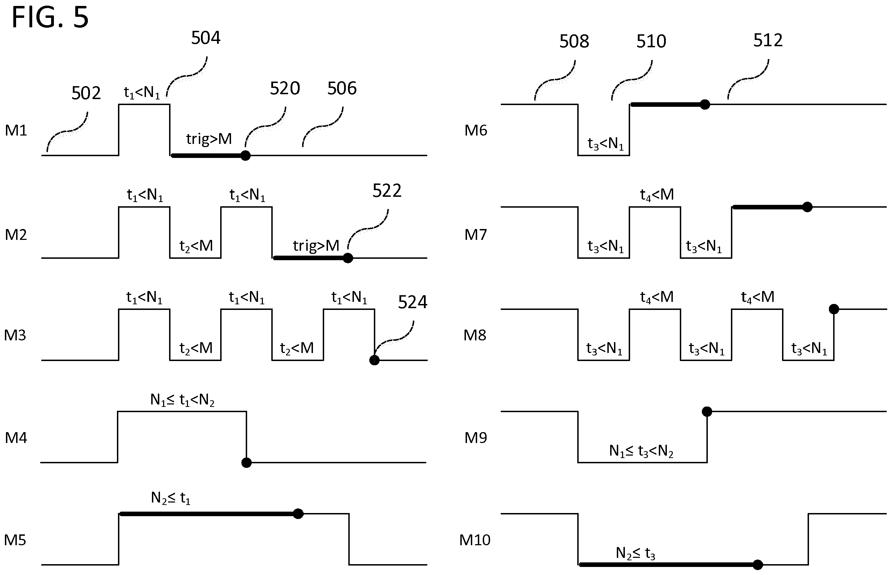

FIG. **5** illustrates a set of different possible NFC movements **M1** - **M10** represented by respective digital waveforms according to an aspect of the disclosure. It is appreciated that each of the detailed NFC movements may be assigned by a user or manufacturer to a different smart device operation, and accordingly may be able to trigger the associated smart device operation upon detection by an NFC-enabled smart device. NFC movements **M1 - M10** are exemplary in nature, and it is appreciated that a number of variations or alternate movements are possible.

A user may equip NFC accessory **100** on one of their fingers, e.g. a forefinger, and may naturally position their fingers along the back side of a smart device, thereby positioning NFC accessory **100** near the back side of a smartphone. As previously detailed, NFC antennas are conventionally located on the back side of a smart device, and NFC accessory **100** may thus be positioned proximate to the NFC field range.

A user may then slide their finger along the back side of a smart device in order to move NFC accessory **100** within NFC field range (*NFC_Detection_Active* state) and out of NFC field range (*NFC_Detection_Inactive* state). The smart device may record then record a timestamp indicating the time in which *NFC_Detection_Active*/*NFC_Detection_Inactive* state was entered/exited, and may create a digital waveform with high level and low level signals corresponding to periods of *NFC_Detection_Active* state and *NFC_Detection_Inactive* state, respectively. The smart device may then utilize the resulting digital waveform as an NFC movement, and may attempt to match the resulting digital waveform with one or more pre-defined NFC movements (represented by unique digital waveforms) each associated with a pre-registered smart device operation. Alternative to sliding their finger along the back side of a smart device, a user may bend or straighten their finger equipped with NFC accessory **100** in order to alternatively bring NFC accessory **100** further from and closer to the NFC antenna, thereby entering and exiting NFC field range.

NFC controller **204** may thus be configured to provide core hardware **208** with NFC detection information associated with an NFC accessory, such as an indication from a hardware level as to whether an NFC accessory is detected or not. Core hardware **208** may then be configured to determine a corresponding movement waveform based on the NFC detection information, such as in the form of timestamps or durations, thereby allowing smart device **200** to determine a detected NFC movement, e.g. in the form of a waveform.

Smart device **200** may then be configured to compare the detected NFC movement with a database of NFC movements (e.g. as performed on a software layer by core hardware **208**), such as stored in smart device memory **206.** Smart device **200** may be configured to perform this comparison based on timing information, such as timestamps and durations of time between timestamps. If the detected NFC movement matches with an NFC movement stored in the database, and if the NFC movement stored in the database has been previously assigned a smart device operation, smart device **200** may trigger the assigned smart device operation. For example, core hardware **208** perform the assigned smart device operation by interacting with any necessary further components of smart device **200** as required by the corresponding smart device operation.

NFC movement **M1** is illustrated as such a digital waveform consisting of high level and low level signals corresponding to *NFC_Detection_Active* and *NFC_Detection_Inactive* state. NFC movement **M1** is depicted as a "Quick Pulse" (QP), where an NFC accessory such as NFC accessory **100** enters into NFC field range *(NFC_Detection_Active* state) and then quickly moves out of NFC field range (*NFC_Detection_Inactive* state).

A user wearing NFC accessory **100** may thus perform NFC movement **M1** by initially holding their finger equipped with NFC accessory **100** in an inactive state, i.e. along the backside of the smart device such that NFC accessory **100** does not fall within NFC field range (*NFC_Detection_Inactive* state). The user may then slide their finger along the back side of the smart device such that NFC accessory **100** falls within the NFC field range (*NFC_Detection_Active* state) for a short period of time before sliding their finger back outside of the NFC field range, thereby causing NFC accessory **100** to leave the NFC field range. Alternatively, a user wearing NFC accessory **100** may initially hold their finger in a bent position such that NFC accessory **100** is positioned slightly off the back side of the smart device, and is thus outside of NFC field range (*NFC_Detection_Active* state). The user may then straighten their finger for a short period of time, causing NFC accessory **100** to become positioned closer to the back of the smart device and thus within NFC field range. The user may then quickly re-bend their finger in order to move NFC accessory **100** back out of NFC detection range.

The illustrated waveform for NFC movement **M1** is thus depicted as a period **502** in *NFC_Detection_Inactive* state (i.e. low level signal) followed by a period **504** in *NFC_Detection_Active* state (i.e. high level signal) and subsequently followed by a period **506** in *NFC_Detection_Inactive* state (i.e. low level signal). The time duration of period **504** should be less than a custom defined *N₁* milliseconds, i.e. *t₁* < *N₁* where *t₁* is the duration of period **504.**

NFC movement **M2** is depicted as a "Double Quick Pulse" (DQP), where an NFC accessory performs two consecutive QP movements (each with a period *N₁* in *NFC_Detection_Active* state) and the interval *t₂* between the two consecutive QP movements is less than a custom defined *M* milliseconds.

In addition to depicting the shape of the digital waveform associated with NFC movements **M1** and **M2,** FIG. **5** additionally depicts triggering points **520** and **522.** Triggering points **520** and **522** indicate the point in time in which smart device **200** may complete recognition of NFC movements **M1** and **M2** and proceed to trigger an associated smart device operation. Smart device **200** may be configured to complete recognition of NFC movements **M1** and **M2** according to triggering points **520** and **522** in order to differentiate between the QP and DQP movements of NFC movements **M1** and **M2.** For example, if smart device **200** is configured to immediately trigger movement **M1** upon detection of an *NFC_Detection_Inactive* → *NFC_Detection_Active* → *NFC_Detection_Inactive* state sequence where the *NFC_Detection_Active* state is less than *N₁* milliseconds, smart device **200** may mistakenly recognize NFC movement **M2** as NFC movement **M1** (and similarly for the NFC movement **M3**). Accordingly, smart device **200** may be configured to wait a certain amount of time until triggering points **520** and **522** following completion of a QP in order to determine which NFC movement was completed. As shown regarding NFC movement **M2,** a DQP movement may be recognized upon detection of an *NFC_Detection_Inactive → NFC_Detection_Active → NFC_Detection_Inactive→ NFC_Detection_Active → NFC_Detection_Inactive* state sequence, where the second *NFC_Detection_Inactive* period is less than *M* milliseconds. Accordingly, smart device **200** may be configured to wait at least *M* milliseconds following detection of a QP movement in order to determine that the most recent QP movement is the final QP movement of the current NFC movement. In this manner, NFC controller **204** may ensure that all desired QP movements are detected (assuming the user has correctly performed the QP movements according to the timing constraints *N₁* and *M*) and avoid prematurely triggering recognition of a QP-based NFC movement before a user has finished performing the full NFC movement.

NFC movement **M3** is depicted as a "Triple Quick Pulse" (TQP), where an NFC accessory does three consecutive QP movements and the interval *t₂* is less than a custom defined *M* milliseconds. As shown in FIG. **5****,** triggering point **524** for NFC movement **M3** is temporally located at the exact point in time where the third QP in the triple QP sequence is completed. As the provided set of NFC movements have a maximum of three QPs (for TQP), it may be possible to recognize three quick pulses as NFC movement **M3** immediately after the third QP is complete, as there is no defined NFC movement consisting of four QPs that could potentially be mistakenly recognized as NFC movement **M3.** Accordingly, trigger point **524** may need to be adjusted if NFC movements are utilized that consist of three or more QPs.

NFC movement **M4** is depicted as a "Normal Pulse" (NP), where an NFC accessory enters into NFC field range and then moves out of NFC field range and the duration of the *NFC_Detection_Active* state (i.e. time spent within NFC field range) is greater than the custom defined *N₁* value and less than a custom defined *N₂* value.

NFC movement **M5** is depicted as "Turn Active" (TA), where an NFC accessory enters into NFC field range (*NFC_Detection_Active* state) and remains in *NFC_Detection_Active* state for more than *N₂* milliseconds.

Smart device **200** may therefore detect NFC movements and determine whether or not the NFC movement is recognized. If the NFC movement is recognized and has been associated with a smart device operation, the respective operation is then triggered, such as by signaling between NFC controller **204** and core hardware **208.**

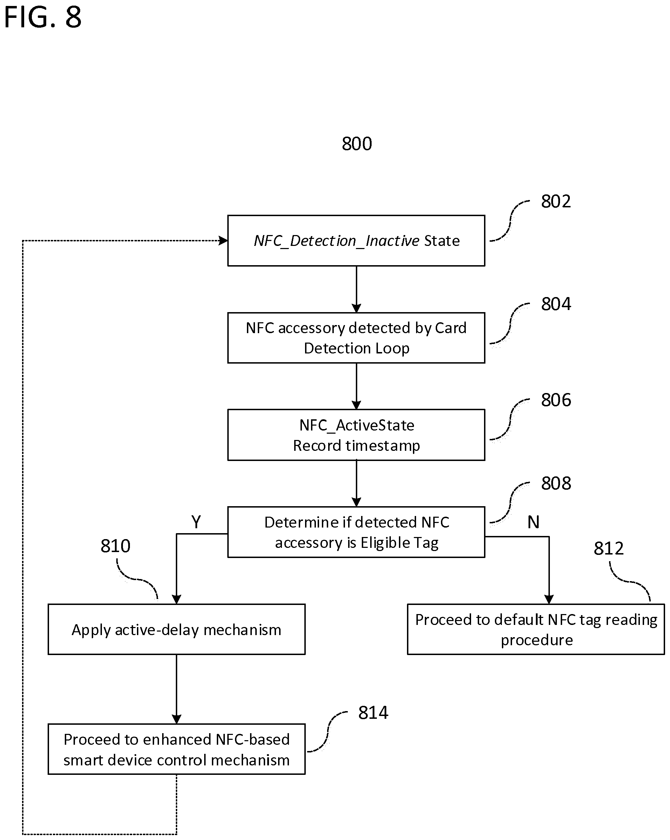

NFC movements **M1 - M5** may be utilized if the "Idle State" of a user wearing an NFC accessory is *NFC_Detection_Inactive.* In other words, if a user naturally holds a smart device in their hand and the NFC accessory is not within NFC field range, the Idle State is defined as *NFC_Detection_Inactive.* In contrast, if a user naturally holds a smart device in their hand and the NFC accessory is within NFC field range, the Idle State is defined as *NFC_Detection_Active.* Accordingly, a user with Idle State as *NFC_Detection_Inactive* may naturally position an NFC accessory in *NFC_Detection_Inactive* state, and may perform one of NFC movements **M1 - M5** starting from *NFC_Detection_Inactive* state (i.e. as in period **502**). It is appreciated that method **300** as detailed regarding FIG. **3** and method **800** to be detailed regarding FIG. **8** may be similarly adapted to initiate from *NFC_Detection_Active* state as opposed to *NFC_Detection_Inactive* to correspond with a potential user having Idle State as *NFC_Detection_Active* state.

A user with Idle State as *NFC_Detection_Active* state may therefore wish to perform NFC movements starting from an initial *NFC_Detection_Active* state. Accordingly, NFC movements **M6 - M10** represent the exclusive OR (XOR) logical operation of movements **M1 - M5,** and correspondingly may be initiated from an *NFC_Detection_Active* state as in period **508.** The initial *NFC_Detection_Active* state in period **508** may be followed by e.g. at least one *NFC_Detection_Inactive* state in period **510** and a further *NFC_Detection_Active* state in period **512.**

NFC movements **M6 - M10** represent the exclusive OR (XOR) signal of NFC movements **M1 - M5,** and may be utilized dependent on the "Idle" NFC detection state of a user wearing an NFC accessory. It is additionally appreciated that while many of the implementations detailed herein relate to users with and *NFC_Detection_Active* Idle State, the operations may be inversed (such as done regarding NFC movements **M6 - M10**) to operate according to a user with an *NFC_Detection_Inactive* Idle State.

Although NFC movements **M1 - M10** have been depicted as either containing one of QP movements, NP movements, or TA movements, it is appreciated that other different movements may be utilized to define NFC movements, such as e.g. one or more QP movements may be combined with one or more NP movements in addition to at least one TA movement in order to define numerous other NFC movements. The provided NFC movements are exemplary in nature, and not intended to be limiting in any respect to a possible set of NFC movements.

As previously detailed, smart device **200** may be configured to record timestamps indicating when NFC accessory **100** enters NFC field range and exits NFC field range, and may be configured to recognize an associated NFC movement based on the recorded timestamps. Smart device **200** may be configured to calculate one or more durations of time during which smart device **200** is in *NFC_Detection_Active* state or in *NFC_Detection_Inactive* state (e.g. on a software level as executed by core hardware **208**), such as by comparing the differences between timestamps indicating an entry into *NFC_Detection_Active* state and subsequent exit therefrom. Smart device **200** may calculate one or more such durations, such as duration *t₁* for NFC movement **M1** (corresponding to the duration of time in *NFC_Detection_Active* state for a QP movement), durations *t₁* and *t₂* for NFC movement **M2** (corresponding to the two durations of time in *NFC_Detection_Active* state for the two QP movements), durations *t₁* and *t₂* for NFC movement **M3,** etc.

Smart device **200** may then compare the calculated durations *t₁* and/or *t₂* to one or more duration thresholds, such as *N₁, N₂,* and *M,* and may trigger an associated smart device operation based thereon. For example, in order to detect NFC movement **M1,** smart device **200** may record timestamps corresponding to state transitions from *NFC_Detection_Inactive* → *NFC_Detection_Active* → *NFC_Detection_Inactive.* Smart device **200** may then compare the duration of time in *NFC_Detection_Active* state *t₁* to *N₁* and *N₂* to determine whether *t₁* < *N₁, N₁* < *t₁ < N₂,* or *t₁* ≥ *N₂.* If *t₁* < *N₁,* smart device **200** may determine that a QP movement has been performed, which may correspond to any of NFC movement **M1 - M3** has been performed as shown in FIG. **5****.** As will be later detailed, smart device **200** may be configured to distinguish between NFC movements **M1 - M3** using triggering points. In the current exemplary scenario, smart device **200** may determine that NFC movement **M1** has been performed, such as through the use of triggering points, and may subsequently trigger a predefined operation corresponding to NFC movement **M1** (such as pre-programmed by a user). Alternatively, smart device **200** may determine that *N₁* < *t₁* < *N₂,* and thus an NP movement corresponding to NFC movement **M4** has been performed. Smart device **200** may alternatively determine that *t₁* ≥ *N₂,* in which case a TA movement corresponding to **M5** has been performed. Smart device **200** may therefore utilized recorded timestamps in order to determine the appropriate duration in a particular state, such as the duration of *t₁* in which smart device **200** is in *NFC_Detection_Active* state in the aforementioned examples, and compare the determined duration to one or more thresholds or other timing measures in order to identify which NFC movement has been performed.

Smart device **200** may also be configured to compare durations of time in order to implement triggering points, such as triggering points **520** and **522** as shown in FIG. **5****.** As previously indicated, smart device **200** may employ triggering points in order to distinguish between certain NFC movements, such as the NFC movements **M1 - M3** as shown in FIG. **5****.** For example, smart device **200** may be configured to calculate the duration of time that has passed since the last state change. In reference to NFC movement **M1,** after identifying the duration of period **504** *t₁* as consistent with a QP movement, smart device **200** may determine how much time has passed in period **506** since the transition from *NFC_Detection_Active* state to *NFC_Detection_Inactive* state. If the duration of time exceeds *M*, smart device **200** may recognize that the performed movement qualifies as NFC movement **M1** (as the user did not perform a second QP within *M* milliseconds), and proceed to trigger any corresponding smart device operation. Smart device **200** may be required to operate similarly to recognize e.g. NFC movement **M2,** as smart device **200** may need to determine that the second QP movement was performed within *M* milliseconds of the first QP movement. Accordingly, the NFC movement being performed should be interpreted as an NFC movement **M2** or **M3** instead of a series of separate NFC movements **M1.**

Smart device **200** may utilize a waveform database containing timing information regarding each stored movement to compare a performed movement (i.e. an NFC movement performed by a user with an NFC accessory) to one or more predefined movements. Smart device **200** may determine corresponding timing information corresponding to a performed movement, and compare the timing information corresponding to a performed movement to timing information stored in the database. For example, smart device **200** may compare timing information corresponding to a performed movement to timing information for each movement stored in the database in order to determine if the timing information corresponding to the performed movement matches timing information for any of the movements stored in the database. Timing information may be based on timestamps, where the timestamps indicate a transition between *NFC_Detection_Active* and *NFC_Detection_Inactive* state, and may be in the form of timestamps and/or duration information indicating time periods between successive timestamps.

Such duration-based comparisons may be based on the timestamps recording indicating state transitions between *NFC_Detection_Active* and *NFC_Detection_Inactive* state. Smart device **200** may thus calculate durations from the recorded timestamps, and utilize the calculated durations in order to recognize different NFC movements.

FIG. **6** illustrates scenarios **600 - 606.** Scenarios **600 - 606** depict examples of NFC accessory positioning in relation to NFC detection state and the position of NFC field range of smart device **200.** In scenario **600** and **602,** a user is depicted as wearing NFC accessory **100** on their forefinger. The user may position NFC accessory **100** on the back of smart device **200,** and may perform the requisite movements to trigger *NFC_Detection_Active* and *NFC_Detection_Inactive* state by moving their finger along the backside of smart device **200** into and out of the NFC field range. The user may naturally hold their finger equipped with NFC accessory **100** in location **610.** As shown in scenario **600,** the NFC field range (shaded area) of smart device **200** is positioned in the top region of the profile of smart device **200.** Accordingly, the user's Idle State is *NFC_Detection_Inactive.* The user may trigger smart device operations according to the enhanced NFC-based smart device control protocols by moving NFC accessory **100** into the NFC field range in scenario **600.** For example, the user may slide their forefinger equipped with NFC accessory **100** to location **612,** which is located within the NFC field range. The user may then create different waveforms by moving their forefinger into the NFC field range and out of the NFC field range, thereby creating a waveform of high and low level signals representing *NFC_Detection_Active* and *NFC_Detection_Inactive* states. By performing preconfigured NFC movements, such as movements **M1 - M5** (as the user's Idle State is *NFC_Detection_Inactive*), a user may trigger a variety of different smart device operations using NFC accessory **100.**

In scenario **602,** the NFC field range of smart device **200** may be located in the bottom region of the profile of smart device **200.** It is appreciated that the NFC field range of a smart device may be dependent on factors such as the position of the NFC antenna and additional profile characteristics of the smart device. Conventionally, NFC antennas are built close to the back of a smart device, and the NFC field range is typically limited to an area at the back of a smartphone. Additionally, the user may rotate their finger so NFC inlay **120** is pointing towards or sideways to the NFC filed of smart device **200** as detailed regarding FIG. **1** in order to adjust the detection sensitivity of NFC accessory **100** by smart device **200.**

As depicted in scenario **602,** the user may naturally hold their forefinger equipped with NFC accessory **100** near the back of smart device **200** in location **612.** Accordingly, the user's natural positioning of NFC accessory **100** may fall outside the NFC field range of smart device **200.** The user's Idle State is therefore *NFC_Detection_Inactive* state, and the user may thus utilize movements **M1 - M5** to trigger smart device operations by moving their finger into NFC field range (*NFC_Detection_Inactive*) and out of NFC field range, such as to location **610** (*NFC_Detection_Active*).

Scenario **604** illustrates an alternative example in which a user naturally bends their finger equipped with NFC accessory **100,** which is located at location **614.** As the user's bent finger equipped with NFC accessory **100** is slightly displaced from the back of smart device **200,** NFC accessory **100** may fall outside of the NFC field range. Accordingly, the user's Idle State may be *NFC_Detection_Inactive.* The user may thus perform NFC movements by straightening and re-bending their finger, thereby moving NFC accessory **100** closer to and further from the back of smart device **200** and correspondingly triggering *NFC_Detection_Active* and *NFC_Detection_Inactive* state. For example, the user may straighten their finger equipped with NFC accessory **100** to move NFC accessory **100** into location **616,** which may be proximate to the back of smart device **200** and consequently within NFC field range.

Alternatively, a user may naturally position their finger equipped with NFC accessory **100** in a straightened (i.e. un-bent) position as shown in scenario **606.** Accordingly, the user may naturally position NFC accessory **100** in location **616,** which is located within the NFC field range of smart device **200.** The user's Idle State may thus be *NFC_Detection_Active* state. The user may then bend and straighten (i.e. un-bend) their finger equipped with NFC accessory **100** in order to move NFC accessory **100** into the NFC field range and out of the NFC field range in order to perform one of e.g. NFC movements **M6 - M10** (as the user's Idle State is *NFC_Detection_Active*)*.*

Alternatively, a manufacturer or user may be able to configure (e.g. via an Application Program Interface) the NFC field strength or other NFC related parameters to adjust the detection sensitivity of NFC accessory **100** by smart device **200.**

It is appreciated that implementations related to this disclosure are not limited to the movements and scenarios as detailed herein, and it is thus understood that the implementations detailed herein are exemplary in nature. It is appreciated that the NFC movements **M1 - M10,** in particular NFC movements **M1 - M4** and **M6 - M9** may be completed by a user in relatively short duration, e.g. several hundreds of milliseconds, before triggering a smartphone operation. Accordingly, users may not experience noticeable latency when triggering smart phone operations with the proposed NFC movements. The enhanced NFC-based smart device control mechanisms provided herein may be executed quickly compared to traditional button presses, and may additionally provide further simplicity due to the eliminated requirement to physically reach each smart device button.

The movement criteria associated with each NFC movement, such as recorded timestamps and the resulting timing durations *N₁, N₂,* and *M,* may be configured based on a user's preference. In addition, further waveforms represented by alternating high level (*NFC_Detection_Active*) and low level (*NFC_Detection_Inactive*) may be defined by a user, thereby allowing a user to the option to freely define the mappings of finger movements and associate any desired smart device operations therewith. The NFC movements may be defined according to a user's preference. The NFC movements may also be based on "fuzzy logic", which does not require a user to exactly match a performed finger movement to a registered NFC movement in order to trigger an associated smart device operation. Smart device **200** may be configured to recognize the defined movements using fuzzy logic, and the user may thus not be required to move the finger to identically match a particular movement or stay in place (i.e. within NFC field range or out of NFC field range) for exactly a certain amount of time to trigger an operation. A user may therefore be provided with a greater ease of use and improved user experience.

Furthermore, an NFC Detection State Indicator may be implemented on a smart device, such as on a status bar on a virtual display or as a physical light indicator. The NFC Detection State Indicator may then be used to visually indicate the current NFC detection state (*NFC_Detection_Active* or *NFC_Detection_Inactive*) based on the current positioning of an eligible NFC accessory. Such an instantaneous display of NFC detection state may assist in keeping a user aware of the varying NFC detection states in real time, and may assist in allowing a user to perform more accurate movements to trigger expected operations.

Additionally, a user or manufacturer may be able to custom-define different movements, which may accordingly not be limited to the provided NFC movements **M1 - M10.** A user may therefore be provided with a smart device application to record specific movements, such as by recording a waveform representing varying NFC detection states. The recorded NFC movement may then be defined and stored according to the associated timing information, such as timestamps indicating NFC detection state transitions between *NFC_Detection_Active* and *NFC_Detection_Inactive.* After recording and approving an NFC movement, a user may be able to assign a specific smart device operation to the movement, thereby allowing the user an increased level of customization.

Each of the defined NFC movements may be utilized to trigger different actions depending on the current status of smart device **200.** For example, a specific movement may be assigned to trigger a "back/previous screen" if smart device **200** is virtually displaying a first virtual menu or at system level, and may be also assigned to trigger "start/stop playback" if smart device **200** is providing multimedia, such as in a steam play application. Other similar options include taking a picture when a camera application is on and locking the screen when smart device **200** is at the home screen. Such configuration options may be made available to a user for increased customization.

In the exemplary aspects of the disclosure detailed above, smart device operations are triggered based on NFC movements defined by NFC detection state waveforms. NFC movements must therefore be identified by a smart device (such as by smart device **200** via a software layer) before a smart device operation is triggered. In an alternative implementation, operations of a smart device may be triggered immediately based on the current NFC detection state, and consequently no movements need to be recognized before triggering an operation.

For example, a user may be performing text editing using a soft keyboard (i.e. virtual) on smart device **200,** such as in a text message. Smart device **200** may detect NFC accessory **100** within NFC field range *(NFC_Detection_Active* state), and may shift to capital letter entry for text editing. Smart device **200** may then shift back to lowercase letter entry if smart device **200** enters back into *NFC_Detection_Inactive* state.

In another example, smart device **200** may trigger a "scroll down" operation when *NFC_Detection_Active* state is triggered and smart device **200** is in a page-view interface, such as e.g. displaying a webpage. Alternatively, smart device **200** may stop scrolling upon triggering of *NFC_Detection_Inactive* state.

In a further example, NFC accessory **100** may be used to copy and paste data between two separate smart devices. In contrast to the default "copy/paste" operation, which is only available in one smart device through "clipboard" functionality, the proposed enhanced NFC-based copy/paste operation may enable interoperation between two NFC-enabled smart devices. For example, if an NFC accessory such as NFC accessory **100** is detected (i.e. *NFC_Detection_Active* state) and a "copy" command (i.e. via an edit menu or "Ctrl + C") is triggered, the selected text may be written into NFC accessory **100,** such as e.g. by NFC signaling through NFC antenna **202** controlled by NFC controller **204.** The selected text may be written as an NDEF message in NFC accessory **100** instead of being simply copied onto the local clipboard of smart device **200.** If NFC accessory **100** is then detected by another NFC-enabled smart device and a "paste" command is triggered, the text previously copied onto NFC accessory **100** may be read from NFC accessory **100** (such as from the NDEF message of NFC accessory 100) by the other NFC-enabled smart device and pasted into the selected area.

The operations detailed above may thus be classified as "operation modes", and may be predefined, such as e.g. by a user or manufacturer. Smart device **200** may thus be configured to switch between operation modes, such as a first operation mode and a second operation mode, based on the detection state of smart device **200.** For example, a user may be able to configure smart device **200** to operate with uppercase text entry as a first operation mode and with lowercase text entry as a second operation mode. The user may then configured the first operation mode to be associated with *NFC_Detection_Active* state and the second operation mode to be associated with *NFC_Detection_Inactive* state, where the user's Idle State is *NFC_Detection_Inactive.*

Smart device **200** may then switch between uppercase and lower text entry corresponding to the first operation mode and the second operation mode depending on the current detection state of smart device **200.** It is appreciated that the above example is exemplary in nature, and may be configurable in various additional manners, such as depending on desired operation modes and/or the user's Idle State.

Furthermore, smart device **200** may be configured to operate according to such operation modes based on context information, such as the action a user is currently performing on smart device **200.** For example, smart device **200** may be configured to have uppercase text entry as a first operation mode, lowercase text entry as a second operation mode, scroll down as a third operation mode, and no scroll as a fourth operation mode.

If a user is operating a text-entry application, such as a text messaging or other word-processing application, smart device **200** may be configured to operate in either the first operation mode or the second operation mode (e.g. corresponding to text entry) depending on the detection state of smart device **200.** If the user is not operating a text entry application and is e.g. utilizing an application that supports scrolling such as a web page browser or mobile reader, smart device **200** may be configured to operate in either the third operation mode or fourth operation mode (i.e. scroll-down or no scroll) depending on the detection state of smart device **200.** It is appreciated that many further variations are possible and embraced herein by this disclosure.

As detailed regarding FIG. **3****,** an important feature of the proposed enhanced NFC-based smart device control is that there is no impact on current standard NFC functionality and operations. When a smart device such as smart device **200** implementing enhanced NFC-based smart device control first detects an NFC accessory, smart device **200** initially reads information specific to the NFC accessory. The information may include a UID, block data, NDEF message, etc., and may be stored in a memory or storage device as part of an NFC inlay. Smart device **200** may be configured to decide which information should be read to perform proper identification of the NFC accessory, and may complete the reading operation in several milliseconds. Based on the read information, smart device **200** may then render a decision as to whether the NFC accessory is an Eligible Tag (i.e. the NFC accessory been pre-registered to interact with smart device **200** according to enhanced NFC-based smart device control protocols) or is alternatively a "normal" tag (i.e. the NFC accessory has not been pre-configured and should be interacted with according to default NFC procedures).

Smart device **200** may be provided with an Eligible Tag Information Table (RTIT) that contains information regarding Eligible Tags (i.e. eligible NFC accessories), such as UIDs, block data, and NDEF messages associated with Eligible Tags. The RTIT may be open to customization to a user, and accordingly may allow a user to add or remove identification information associated with specific NFC accessories in order to configured desired NFC accessories for use with enhanced NFC-based smart device control.

Smart device **200** may customize which information provided by a detected NFC accessory to read. Once smart device **200** detects an NFC accessory, smart device **200** may read the appropriate identification information and perform a comparison with the information in the RTIT to determine whether the NFC accessory is an Eligible Tag (i.e. as done in **308** of method **300**). If the information read from the NFC accessory matches information in the RTIT, the NFC accessory is considered as an Eligible Tag and may accordingly be used as a controller for enhanced NFC-based smart device control, such as detailed regarding method **400** of FIG. **4****.** The NFC accessory may be either used for movement recognition-based control (recognition of predefined NFC movements) or state-based control (immediate triggering of a predefined operation based on NFC detection state). Accordingly, the default NFC tag reading procedure may be ignored.

Alternatively, if the information read from the NFC accessory does not match any identification information in the RTIT, smart device **200** may treat the NFC accessory as a normal NFC tag (i.e. not an Eligible Tag). Smart device **200** may then proceed with default NFC operations.

The implementation of the identification scenarios may be deployed at an upper software layer, such as the Framework layer in an Android Operating System, and may be physically executed by e.g. a processor. The implementation of the identification scenarios at an upper layer may avoid any impact on the current NFC tag reading procedures.

A user may add the UID unique to an NFC accessory to the RTIT in order to register the NFC accessory as an Eligible Tag. Additionally, a user may also custom-define a specific type of data stored in an NFC accessory (e.g. eligible NFC block data , eligible NDEF message, etc.) and update the data to both the RTIT and the normal tag.

Smart device **200** may additionally be provided with an active-delay based mechanism to enhance the robustness of the ability of smart device **200** to correctly recognize NFC movements. In reference to FIG. **4****,** smart device **200** may implement an NFC Tag Presence Loop via NFC controller **204,** which may perform a check every *X* milliseconds as to whether an NFC accessory such as NFC accessory **100** remains within NFC field range. The NFC Tag Presence Loop may thus be utilized in order to detect when a previously detected NFC accessory exits the NFC field range. Smart device **200** may record a series of timestamps signifying *NFC_Detection_Active* and *NFC_Detection_Inactive* state based on whether the NFC Tag Presence Loop determines that the NFC accessory has entered or exited the NFC field range.

However, the NFC Tag Presence loop may be prone to false results, such as where the NFC Tag Presence Loop mistakenly signals a "Tag Not Present" (i.e. indicating that the NFC accessory is no longer within NFC field range) when the NFC accessory has remained in the NFC field range. Smart device **200** may therefore incorrectly record a timestamp signaling *NFC_Detection_Inactive* state, which may prevent a desired user NFC movement from being properly recognized due to the incorrect timestamp. A potential cause for a mistaken "Tag Not Present" result is extremely rapid movement of the NFC accessory within the NFC field range. Such rapid movement may mistakenly cause NFC controller **204** to fail to determine that the NFC accessory remains within NFC field range. However, the NFC accessory may be rapidly re-detected by the Card Detection Loop (**304** in method **300**) implemented in Firmware level. Smart device **200** may record the associated timestamps (recorded at the "Tag Not Present" result time of NFC Tag Presence Loop and at the re-detection by Card Detection Loop) as a series of *NFC_Detection_Active* and *NFC_Detection_Active* states similar to a QP movement. However, the user has in actuality not performed any such QP movement, and NFC controller **204** may then mistakenly recognize or fail to recognize an NFC movement performed by the user.

In order to prevent such mistaken "Tag Not Present" results from NFC Tag Presence Loop, smart device **200** may implement an active-delay mechanism. Once smart device **200** enters *NFC_Detection_Active* state (following initial detection of an NFC accessory), if the NFC accessory is detected or re-detected either by the Card Detection Loop (e.g. at firmware level) or if the NFC Tag Presence Loop returns a "Tag Present" result (e.g. at software level) at a time *timestampᵢ,* smart device **200** may forcibly extend *NFC_Detection_Active* state for a period of time *t* following *timestampᵢ.* The parameter *t* may be customized in a custom manner, such set to any value *t* = *k*^{∗}*X,* where *X* is the loop duration of the NFC Presence Tag Loop and *k* = 2, 3, etc. This process may recursively repeat, causing smart device **200** to remain in *NFC_Detection_Active* state for a period of time *t* following the most recent detection by the Card Detection Loop or "Tag Present" result from the NFC Presence Tag Loop, even if the NFC Presence Tag Loop returns a "Tag Not Present" result during the period of time *t.* However, if all of the NFC Presence Tag Loop results during the period of time *t* are "Tag Not Present" and the NFC accessory is not re-detected by the Card Detection Loop, NFC controller **204** may then consider that the NFC accessory has exited the NFC field range. NFC controller **204** may then enter *NFC_Detection_Inactive* state.

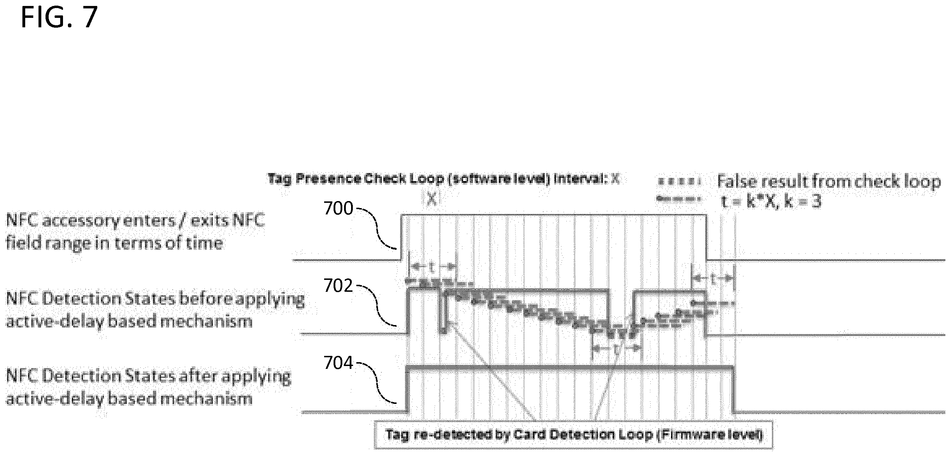

FIG. 7 illustrates a scenario in which smart device **200** may implement the active-delay mechanism with parameter *k* = 3. Waveform **700** depicts whether the NFC accessory is physically within NFC field range (high level signal) or is physically outside of NFC field range (low level signal). Waveform **702** depicts the NFC detection state of smart device **200** before applying the active delay mechanism. As shown in waveform **702,** NFC Tag Presence Loop may mistakenly return incorrect "Tag Not Present" results, which are shown at *t* = 2 and *t* = 12. However, the Card Detection Loop may quickly re-detect the presence of the NFC accessory, as the NFC accessory has not physically exited the NFC field range (as indicated by waveform **700**). Accordingly, waveform **704** depicts the NFC detection state of smart device **200** after applying active-delay mechanisms. As the presence of the NFC accessory is quickly re-detected by the Card Detection Loop within *t* = *3X* milliseconds, smart device **200** remains in *NFC_Detection_Active* state and does not immediately fall back to *NFC_Detection_Inactive* state upon return of a "Tag Not Present" result by the NFC Tag Presence Loop.

In other words, smart device **200** will remain in *NFC_Detection_Active* state unless the NFC Tag Presence Loop indicates that the NFC accessory is not within NFC field range for a period of *t* = *3X* milliseconds following detection of the NFC accessory by either loop. Accordingly, smart device **200** delays *NFC_Detection_Active* state for a period of time (*k*-1)^{∗}*X* milliseconds before falling to *NFC_Detection_Inactive* state. Incorrect premature triggering of *NFC_Detection_Inactive* state may thus be avoided through the implementation of the active-delay mechanism. In the event that the NFC accessory is determined to have exited the NFC field range, the timestamp associated with the initial "Tag Not Present" result may be utilized by smart device **200** to define the recorded NFC movement. The custom-defined movement criteria related to NFC movements **M1 - M10,** such as *N₁, N₂,* etc., may be also adjusted accordingly. It is appreciated that the active-delay mechanism may also be applied to the non-movement based operation triggering, such as toggling uppercase text entry or scrolling up/down a displayed page.

FIG. **8** illustrates an exemplary method **800** for enabling smart device **200** to detect an NFC accessory such as NFC accessory **100** using the active-delay mechanism. In **802,** method **800** may begin in *NFC_Detection_Inactive* state, where no NFC accessory is detected within the NFC field range. Smart device **200** may be in an "NFC polling mode" and have an NFC Card Detection Loop enabled. In **804,** NFC controller **204** may detect an NFC accessory, such as on a firmware level by the NFC Card Detection Loop. Smart device **200** may subsequently enter *NFC_Detection_Active* state, such as on a software level within core hardware **208,** and may record a timestamp indicating the initiation of *NFC_Detection_Active* state in **806.** NFC controller may then determine if the detected NFC accessory is an Eligible Tag in **808,** such as by performing a read operation of information stored on the NFC accessory and comparing the read information to a database containing identification information for Eligible Tags. If the NFC accessory is not an Eligible Tag, method **800** may proceed to **812** to perform default NFC accessory procedures. If the NFC accessory is an Eligible Tag, method **800** may apply an active-delay mechanism in **810.** As smart device **200** entered into *NFC_Detection_Active* state in **806,** the active-delay mechanism may involve extending *NFC_Detection_Active* state until the NFC Tag Presence Loop signal that the NFC accessory is not within NFC field range for at least a pre-defined duration (e.g. *t* = *k*^{∗}X milliseconds). Method **800** may then utilize the active delay mechanism to proceed to enhanced NFC-based smart device control in **814** in order to detect user NFC movements, thereby enabling smart device control. As further depicted in FIG. **8****,** method **800** may be implemented in a repetitive manner, and may return to *NFC_Detection_Inactive* state in **802** after executing the enhanced NFC-based smart device control mechanism in **814.**

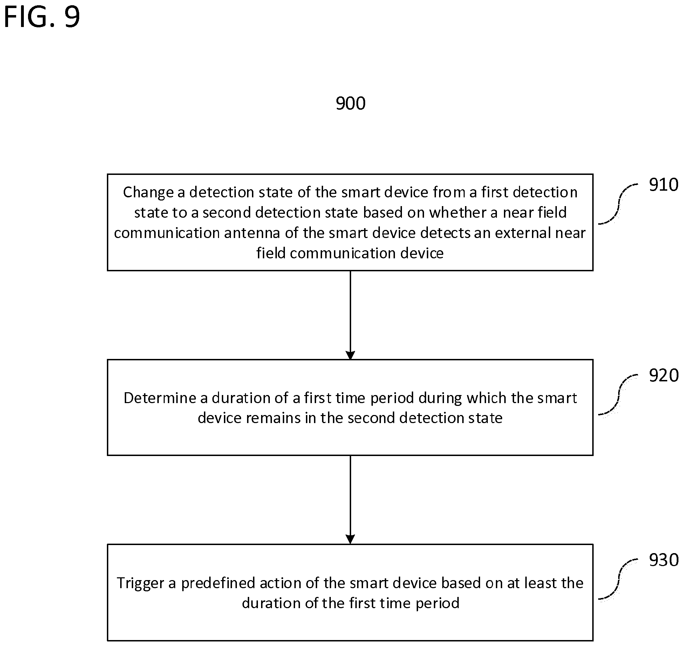

FIG. **9** shows a flow diagram illustrating method **900** for controlling a smart device. Method **900** may change a detection state of the smart device from a first detection state to a second detection state based on whether a near field communication antenna of the smart device detects an external near field communication device in **910.** In **920,** method **900** may determine a duration of a first time period during which the smart device remains in the second detection state. Method **900** may then trigger a predefined action of the smart device based on at least the duration of the first time period in **930.**

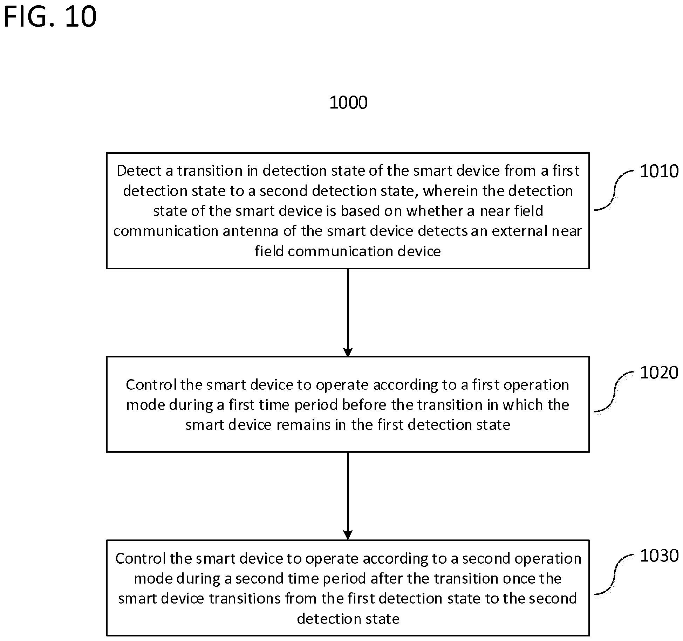

FIG. **10** shows a flow diagram illustrating method **1000** for controlling a smart device. In **1010,** method **1000** may detect a transition in detection state of the smart device from a first detection state to a second detection state, wherein the detection state of the smart device is based on whether a near field communication antenna of the smart device detects an external near field communication device. Method **1000** may then control the smart device to operate according to a first operation mode during a first time period before the transition in which the smart device remains in the first detection state in **1020.** Method **1000** may control the smart device to operate according to a second operation mode during a second time period after the transition once the smart device transitions from the first detection state to the second detection state in **1030.**

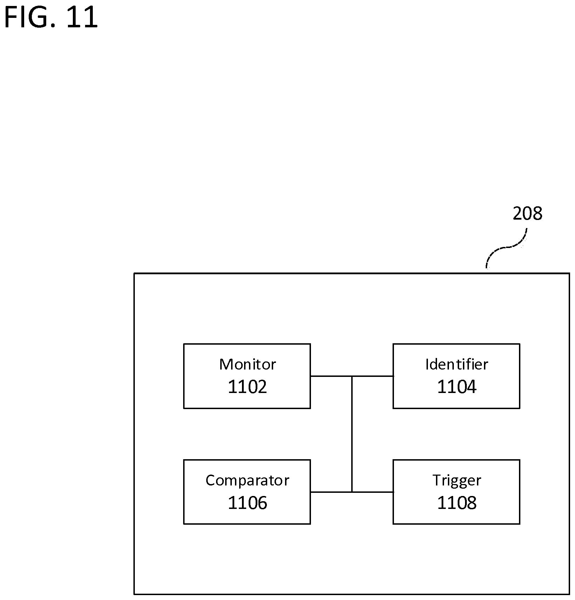

FIG. **11** shows a block diagram illustrating exemplary internal components of core hardware **208** of FIG. **2****.**

As shown in FIG. **11****,** core hardware **208** may include monitor **1102,** identifier **1104,** comparator **1106,** and trigger **1108.** Monitor **1102,** identifier **1104,** comparator **1106,** and trigger **1108** may each be configured to implement features of the smart device control process detailed above, in particular the enhanced NFC-based smart device control detailed regarding FIGS. **3 - 8****.**

In an exemplary aspect of the disclosure, core hardware **208** may be provided as an internal component of a smart device, such as detailed regarding smart device **200** in FIG. **2****.** In this exemplary aspect of the disclosure, smart device **200** may include an antenna such as antenna **202** configured to detect an external near field communication device. Monitor **1102** may be configured to monitor a series of one or more transitions in a detection state of smart device **200** between a first detection state and a second detection state based on whether the near field communication antenna detects the near field communication device.

Comparator **1104** may be configured to perform a comparison between first timing information associated with the series of one or more transitions and second timing information associated with a first predefined series of one or more transitions.

Trigger **1106** may be configured to initiate a predefined action of smart device **200** based on the comparison.

Identifier **1108** may be configured to determine identification information of the external near field communication device.

Accordingly, monitor **1102,** identifier **1104,** comparator **1106,** and trigger **1108** may be configured to perform one or more features of core hardware **208.** It is appreciated that one or more of the features and/or functionality of monitor **1102,** identifier **1104,** comparator **1106,** and trigger **1108** may e.g. be combined into a single component, or may e.g. all be integrated to form a single component, such as core hardware **208.**

Monitor **1102,** identifier **1104,** comparator **1106,** and trigger **1108** may be implemented as hardware, software, or a combination of hardware and software. In an exemplary aspect of the present disclosure, monitor **1102,** identifier **1104,** comparator **1106,** and trigger **1108** may each be implemented as one or more software modules by processing circuity of core hardware **208,** such as software processes executed by an application processor (i.e. core hardware **208**) of smart device **200.** In another exemplary aspect of the present disclosure, monitor **1102,** identifier **1104,** comparator **1106,** and trigger **1108** may each be implemented as one or more dedicated hardware components of core hardware **208.** It is appreciated that many such variations are considered within the scope of this disclosure and accordingly are understood to be embraced herein.

It is appreciated that core hardware **208** may further or alternatively include one or more additional elements. In an exemplary aspect of the disclosure, core hardware **208** may include e.g. a detector configured to change a transition in detection state of the device from a first detection state to a second detection state, wherein the detection state of the device is based on whether the near field communication antenna detects the external near field communication device or e.g. a controller configured to control the device to operate according a first operation mode during a first time period before the transition in which the device remains in the first detection state and control the device to operate according to a second operation mode during a second time period after the transition once the device transitions from the first detection state to the second detection state. In a further exemplary aspect of the disclosure, core hardware 208 may include e.g. a monitor configured to monitor a series of one or more transitions in a detection state of the device between a first detection state and a second detection state based on whether the near field communication antenna detects the near field communication device, e.g. a comparator is configured to perform a comparison between first timing information associated with the series of one or more transitions and second timing information associated with a first predefined series of one or more transitions, and/or e.g. a trigger configured to initiate a predefined action of the device based on the comparison. Similarly to as detailed regarding , monitor **1102,** identifier **1104,** comparator **1106,** and trigger **1108** in FIG. **11****,** one or more of the exemplary detector, controller, monitor, comparator, and/or trigger may be implemented one or more components of core hardware **208,** and thus may be implemented as hardware, software, and/or a combination of hardware and software.

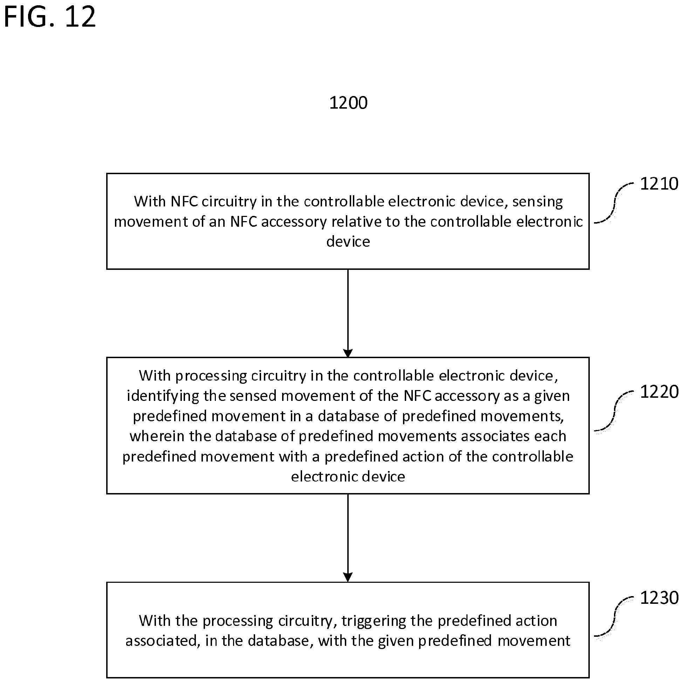

FIG. **12** shows method **1200** for operating a controllable electronic device. In **1210,** method **1200** may, with NFC circuitry in the controllable electronic device, sense movement of an NFC accessory relative to the controllable electronic device. Method **1200** may then, with processing circuitry in the controllable electronic device, identify the sensed movement of the NFC accessory as a given predefined movement in a database of predefined movements, wherein the database of predefined movements associates each predefined movement with a predefined action of the controllable electronic device in **1220.** In **1230,** method **1200** may, with the processing circuitry, trigger the predefined action associated, in the database, with the given predefined movement.

In further exemplary aspects of the disclosure, one or more of methods **900, 1000,** or **1200** may be associated with features detailed regarding any one or more of FIGS. **1-9**, and may be accordingly configured to implement functionality detailed with respect thereto. This disclosure is considered demonstrative in nature, and accordingly any such combinations between one or aspects of this disclosure detailed herein are considered to be fully embraced.

The implementation of enhanced NFC-based smart device control as detailed herein may be used to trigger a number of different smart device operations based on the variety of unique movements a user may perform with an NFC accessory. The smart device may record time stamps representing points in time in which the NFC accessory enters and exits the NFC field range, thereby defining a digital waveform. The smart device may then compare the recorded digital waveform against a waveform database in order to determine whether the performed movement has been pre-configured by a user or manufacturer to trigger a predefined smart device operation. The smart device may then perform the associated predefined smart device operation, such as through use of an NFC controller.

The enhanced NFC-based smart device control may also be utilized to trigger certain operation states directly based on *NFC_Detection_Active* or *NFC_Detection_Inactive* state, such as toggling uppercase/lowercase text entry, scrolling on a virtually displayed page, or copy/paste operations.

Although the implementations described herein have been detailed as involving a single NFC accessory associated with two states (*NFC_Detection_Active* and *NFC_Detection_Inactive*), it is appreciated that similar approaches may be expanded to operate with multiple NFC accessories. For example, a user may equip two or more NFC accessories and define NFC movements based on digital waveforms for each NFC accessory. A user may consequently define further movements based on the NFC detection state of each NFC accessory.

In addition to performing predefined smart device operations, NFC accessories may be used similarly to as detailed above to support other user multimedia operations, such as playing a virtual game on a smart device. Various NFC movements may be defined and configured to trigger certain operations within the virtual game, such as to move a virtual avatar within a game or perform a series of actions within the virtual game. The approaches detailed above regarding triggering certain operation states directly based on NFC detection state may additionally be utilized, such as triggering a virtual avatar to perform a running action movement when an NFC accessory enters into the NFC field range (*NFC_Detection_Active* state) and to perform a walking/default action movement when the NFC accessory exits the NFC field range (*NFC_Detection_Inactive* state).

Similarly, while sections of this disclosure have focused on controlling a smart device, it is appreciated that any number of controllable devices may be similarly operated utilizing one or more features detailed herein. It is understood that the implementations detailed herein may be applicable to any number of handheld and/or portable devices that are NFC-capable, such as any number of cellular phones, laptops, tablets, keyboards, computer mice, or any such device capable of receiving user input. Furthermore, it is understood that the applications are not limited to portable and/or handheld devices, and e.g. may be applied to stationary devices including personal computers, entertainment systems, home security systems (including e.g. locking and/or door mechanisms), and any number of controllable consumer appliances and/or devices.

The following examples pertain to further aspects of the disclosure:

Example 1 is a device. The device includes a near field communication antenna configured to detect an external near field communication device, and a processor configured to detect a change in detection state of the device from a first detection state to a second detection state, wherein the change in detection state of the device is based on whether the near field communication antenna detects the external near field communication device, determine a duration of a first time period during which the device remains in the second detection state, and trigger a predefined action of the device based on at least the duration of the first time period.

In Example 2, the subject matter of Example 1 can optionally include wherein the first time period is associated with a performed series of one or more transitions in detection state of the device and the predefined action is associated with a predefined series of one or more transitions in detection state of the device, and wherein the processor is further configured to determine whether the performed series of one or more transitions matches with the predefined series of one or more transitions based on at least the duration of the first time period.

In Example 3, the subject matter of Example 2 can optionally include wherein the processor is configured to trigger the predefined action of the device if the performed series of one or more transitions matches with the predefined series of one or more transitions based on at least the duration of the first time period.

In Example 4, the subject matter of Example 3 can optionally include wherein the processor is configured to trigger the predefined action of the device if the performed series of one or more transitions matches with the predefined series of one or more transitions based on at least the duration of the first time period and the duration of a time period associated with the predefined series of one or more transitions.

In Example 5, the subject matter of Example 2 can optionally include wherein the processor is further configured to detect a change in detection state of the device from the second detection state to the first detection state after the first time period, determine a duration of a second time period occurring after the first time period during which the device remains in the first detection state, and determine whether the performed series of one or more transitions matches with the predefined series of one or more transitions based on at least the duration of the first time period and the duration of the second time period.

In Example 6, the subject matter of Example 2 can optionally include wherein the duration of the first time period is based on a first transition time when the detection state of the device changes from the first detection state to the second detection state.

In Example 7, the subject matter of Example 6 can optionally include wherein the processor is configured to determine a timestamp indicating the time of the first transition time.

In Example 8, the subject matter of Example 6 can optionally include wherein the duration of the first time period is further based on a second transition time when the detection state of the device changes from the second state to the first detection state.

In Example 9, the subject matter of Example 2 can optionally include wherein the performed series of one or more transitions is based on a spatial movement pattern of the external near field communication device relative to the device.

In Example 10, the subject matter of Example 2 can optionally include wherein the performed series of one or more transitions includes a first plurality of transitions in detection state of the device.

In Example 11, the subject matter of Example 10 can optionally include wherein the processor is configured to trigger the predefined action of the device based on timing information associated with the first plurality of transitions.

In Example 12, the subject matter of Example 11 can optionally include wherein the timing information associated with the first plurality of transitions includes at least the duration of the first time period.

In Example 13, the subject matter of Example 12 can optionally include wherein the timing information associated with the first plurality of transitions includes one or more further durations.

In Example 14, the subject matter of Example 12 can optionally include wherein the duration of the first time period is the duration of time between a first transition and a second transition of the first plurality of transitions.

In Example 15, the subject matter of Example 10 can optionally include wherein the predefined series of one or more transitions includes a second plurality of transitions, and wherein the processor is configured to trigger the predefined action of the device based on timing information associated with the first plurality of transitions and timing information associated with the second plurality of transitions.

In Example 16, the subject matter of Example 15 can optionally include wherein the processor is configured to trigger the predefined action of the device based on whether the timing information associated with the first plurality of transitions matches the timing information associated with the second plurality of transitions.

In Example 17, the subject matter of Example 16 can optionally include wherein the processor is configured to determine whether the timing formation associated with the first plurality of transitions matches the timing information associated with the second plurality of transitions based on fuzzy logic.

In Example 18, the subject matter of Example 1 can optionally include wherein the duration of the first time period is based on a first transition time when the detection state of the device changes from the first detection state to the second detection state.

In Example 19, the subject matter of Example 18 can optionally include wherein the duration of the first time period is further based on a second transition time when the detection state of the device changes from the second state to the first detection state.

In Example 20, the subject matter of Example 1 can optionally include wherein the processor is further configured to detect a change in detection state of the device from the second detection state to the first detection state after the first time period, determine a duration of a second time period occurring after the first time period during which the device remains in the first detection state, and trigger the predefined action of the device based on at least the duration of the first time period and the duration of the second time period.

In Example 21, the subject matter of Example 20 can optionally include wherein the processor is configured to trigger the predefined action of the device based on at least the duration of the first time period and the duration of the second time period by comparing the duration of the first time period and the duration of the second time period to one or more duration thresholds, wherein the one or more duration thresholds are associated with a predefined series of one or more transitions in the detection state of the device between the first detection state and the second detection sate.

In Example 22, the subject matter of Example 20 or 21 can optionally include wherein the processor is configured to trigger the predefined action of the device if the duration of the first time period and the duration time period match with the one or more duration thresholds.

In Example 23, the subject matter of Example 21 can optionally include wherein the predefined series of one or more transitions is associated with the predefined action of the device.

In Example 24, the subject matter of Example 1 can optionally include wherein the processor is further configured to determine durations of one or more further time periods during which the device remains in the first detection state or the second detection state, and trigger the predefined action of the device based on the duration of the first time period and the durations of the one or more further time periods.

In Example 25, the subject matter of Example 24 can optionally include wherein the processor is configured to trigger a predefined action of the device by comparing the duration of the first time period and the one or more further time periods to at least one predefined duration threshold, and triggering the predefined action of the device based on the comparison.

In Example 26, the subject matter of Example 25 can optionally include wherein the at least one predefined duration threshold is associated with a predefined series of one or more transitions in the detection state of the device.

In Example 27, the subject matter of Example 1 can optionally include wherein the processor is configured to trigger a predefined action of the device by comparing the duration of the first time period to at least one predefined duration threshold, and triggering the predefined action based on the comparison.

In Example 28, the subject matter of Example 27 can optionally include wherein the at least one predefined duration threshold is associated with a predefined series of one or more transitions in the detection state of the device.

In Example 29, the subject matter of Example 28 can optionally include wherein the at least one predefined duration threshold is the duration in time between a first transition and a second transition in the predefined series of one or more transitions.

In Example 30, the subject matter of Example 1 can optionally further include a memory configured to store identification information, and wherein the processor is configured to trigger the predefined action of the device further based on whether identification information of the external near field communication device matches the identification information stored in the memory.

In Example 31, the subject matter of Example 1 can optionally include wherein the first detection state is a detection state in which the external near field communication device is not detected by the near field communication antenna, and wherein the second detection state is a detection state in which the external near field communication device is detected by the near field communication antenna.

In Example 32, the subject matter of Example 1 can optionally include wherein the first detection state is a detection state in which the external near field communication device is detected by the near field communication antenna, and wherein the second detection state is a detection state in which the external near field communication device is not detected by the near field communication antenna.

In Example 33, the subject matter of Example 1 can optionally include wherein the external near field communication device is located on the finger of a user.

Example 34 is a device. The device includes a near field communication antenna configured to detect an external near field communication device. The device further includes a monitor configured to monitor a series of one or more transitions in a detection state of the device between a first detection state and a second detection state based on whether the near field communication antenna detects the near field communication device, a comparator configured to perform a comparison between first timing information associated with the series of one or more transitions and second timing information associated with a first predefined series of one or more transitions, and a trigger configured to initiate a predefined action of the device based on the comparison.

In Example 35, the subject matter of Example 34 can optionally include wherein the predefined series of one or more transitions is based on a spatial movement pattern of the external near field communication device relative to the device.

In Example 36, the subject matter of Example 34 can optionally include wherein the trigger is configured to initiate the predefined action if the first timing information matches the second timing information.

In Example 37, the subject matter of Example 36 can optionally include wherein the comparator is configured to determine if the first timing information matches the second timing information based on fuzzy logic.

In Example 38, the subject matter of Example 34 can optionally include wherein the comparator is further configured to compare the first timing information with third timing information associated with a second predefined series of one or more transitions, and wherein the trigger is further configured to initiate a further predefined action of the device if the first timing information matches the third timing information.

In Example 39, the subject matter of Example 34 can optionally further inclue a memory configured to store the second timing information and third timing information.

In Example 40, the subject matter of Example 39 can optionally include wherein the memory is further configured to store information associating the second timing information with the first predefined series of one or more transitions and information associating the third timing information with the second predefined series of one or more transitions.

In Example 41, the subject matter of Example 34 can optionally include wherein the first predefined series of one or more transitions is associated with the predefined action of the device, and wherein the second predefined series of one or more transitions is associated with the further predefined action.

In Example 42, the subject matter of Example 34 can optionally include wherein the first timing information associated with the series of one or more transitions includes a first plurality of timestamps.

In Example 43, the subject matter of Example 42 can optionally include wherein the second timing information associated with the predefined series of one or more transitions includes a second plurality of time stamps, and wherein the comparator is configured to perform the comparison between the first timing information and the second timing information by comparing the first plurality of time stamps with the second plurality of time stamps.

In Example 44, the subject matter of Example 34 can optionally include wherein the first timing information associated with the series of one or more transitions include a first set of one or more durations.

In Example 45, the subject matter of Example 44 can optionally include wherein the second timing information associated with the predefined series of one or more transitions includes a second set of one or more durations, and wherein the comparator is configured to perform the comparison between the first timing information and the second timing information by comparing the first set of one or more durations with the second set of one or more durations.

In Example 46, the subject matter of Example 34 can optionally include wherein the first predefined series of one or more transitions is associated with the predefined action of the device.

In Example 47, the subject matter of Example 34 can optionally further inclue a memory configured to store the second timing information.

In Example 48, the subject matter of Example 47 can optionally include wherein the first predefined series of one or more transitions is associated with the predefined action of the device, and wherein the memory is further configured to store information associating the first predefined series of one or more transitions with the predefined action of the device.

In Example 49, the subject matter of Example 34 can optionally include wherein the first timing information and second timing information each include one or more timestamps indicating a transition time between the first detection state and the second detection state, and wherein the comparator is configured to perform the comparison by comparing the one or more timestamps.

In Example 50, the subject matter of Example 49 can optionally include wherein the trigger is configured to initiate the predefined action of the device if the one or more timestamps of the first timing information match the one or more timestamps of the second timing information.

In Example 51, the subject matter of Example 49 can optionally further inclue a memory configured to store the one or more timestamps of the second timing information.

In Example 52, the subject matter of Example 51 can optionally include wherein the memory is further configured to store information associating the predefined action with the first predefined series of one or more transitions.

In Example 53, the subject matter of Example 51 can optionally include wherein the information associating the predefined action with the predefined series of one or more transitions is configurable by a user.

In Example 54, the subject matter of Example 34 can optionally further inclue an identifier configured to determine identification information of the external near field communication device, and wherein the trigger is configured to initiate the predefined action of the device further based on the identification information of the external near field communication device.

In Example 55, the subject matter of Example 1 can optionally include wherein the comparator is configured to compare the identification of external near field communication device with identification information stored in a memory.

In Example 56, the subject matter of Example 34 can optionally include wherein the comparator is configured to perform the comparison in real time.

In Example 57, the subject matter of Example 34 can optionally include wherein the first detection state is a detection state in which the external near field communication device is not detected by the near field communication antenna, and wherein the second detection state is a detection state in which the external near field communication device is detected by the near field communication antenna.

In Example 58, the subject matter of Example 34 can optionally include wherein the first detection state is a detection state in which the external near field communication device is detected by the near field communication antenna, and wherein the second detection state is a detection state in which the external near field communication device is not detected by the near field communication antenna.

In Example 59, the subject matter of Example 34 can optionally include wherein the external near field communication device is located on the finger of a user.

In Example 60, the subject matter of Example 34 can optionally include wherein the comparator is configured to perform the comparison using fuzzy logic.

Example 61 is a method for controlling a device. The method includes monitoring a change in detection state of the device from a first detection state to a second detection state, wherein the change in detection state of the smart phone is based on whether a near field communication antenna of the device detects an external near field communication device, determining a duration of a first time period during which the device remains in the second detection state, and triggering a predefined action of the device based on at least the duration of the first time period.

In Example 62, the subject matter of Example 61 can optionally include wherein the first time period is associated with a performed series of one or more transitions in detection state of the device and the predefined action is associated with a predefined series of one or more transitions in detection state of the device, and further including determining whether the performed series of one or more transitions matches with the predefined series of one or more transitions based on at least the duration of the first time period.

In Example 63, the subject matter of Example 62 can optionally include wherein the triggering the predefined action of the device includes triggering the predefined action of the device if the performed series of one or more transitions matches with the predefined series of one or more transitions based on at least the duration of the first time period.

In Example 64, the subject matter of Example 63 can optionally include wherein the triggering the predefined action of the device includes triggering the predefined action of the device if the performed series of one or more transitions matches with the predefined series of one or more transitions based on at least the duration of the first time period and the duration of a time period associated with the predefined series of one or more transitions.

In Example 65, the subject matter of Example 62 can optionally further include monitoring a change in detection state of the device from the second detection state to the first detection state, determining a duration of a second time period occurring after the first time period during which the device remains in the first detection state, and determining whether the performed series of one or more transitions matches with the predefined series of one or more transitions based on at least the duration of the first time period and the duration of the second time period.

In Example 66, the subject matter of Example claim can optionally include , wherein the duration of the first time period is based on a first transition time when the detection state of the device changes from the first detection state to the second detection state.

In Example 67, the subject matter of Example 66 can optionally further include recording a timestamp indicating the time of the first transition time.

In Example 68, the subject matter of Example 66 can optionally include wherein the duration of the first time period is further based on a second transition time when the detection state of the device changes from the second state to the first detection state.

In Example 69, the subject matter of Example 61 can optionally further include determining the duration of the first time period based on a first transition time when the detection state of the device changes from the first detection state to the second detection state.

In Example 70, the subject matter of Example 69 can optionally further include determining the duration of the first time period based on a second transition time when the detection state of the device changes from the second state to the first detection state.

In Example 71, the subject matter of Example 62 can optionally include wherein the performed series of one or more transitions is associated with a spatial movement pattern of the external near field communication device relative to the device.

In Example 72, the subject matter of Example 62 can optionally include wherein the performed series of one or more transitions includes a first plurality of transitions in detection state of the device.

In Example 73, the subject matter of Example 72 can optionally include wherein the processor is configured to trigger the predefined action of the device based on timing information associated with the first plurality of transitions.

In Example 74, the subject matter of Example 73 can optionally include wherein the timing information associated with the first plurality of transitions includes at least the duration of the first time period.

In Example 75, the subject matter of Example 74 can optionally include wherein the timing information associated with the first plurality of transitions further includes one or more further durations.

In Example 76, the subject matter of Example 74 can optionally include wherein the duration of the first time period is the duration of time between a first transition and a second transition of the first plurality of transitions.

In Example 77, the subject matter of Example 72 can optionally include wherein the predefined series of one or more transitions includes a second plurality of transitions, and wherein the triggering the predefined action of the device includes triggering the predefined action of the device based on timing information associated with the first plurality of transitions and timing information associated with the second plurality of transitions.

In Example 78, the subject matter of Example 77 can optionally further include determining whether the timing formation associated with the first plurality of transitions matches the timing information associated with the second plurality of transitions based on fuzzy logic.

In Example 79, the subject matter of Example 61 can optionally further include monitoring a change in detection state of the device from the second detection state to the first detection state after the first time period, determining a duration of a second time period occurring after the first time period during which the device remains in the first detection state, and triggering the predefined action of the device based on at least the duration of the first time period and the duration of the second time period.

In Example 80, the subject matter of Example 79 can optionally include wherein the triggering the predefined action of the device based on at least the duration of the first time period and the duration of the second time period includes comparing the duration of the first time period and the duration of the second time period to one or more duration thresholds, wherein the one or more duration thresholds are associated with a predefined series of one or more transitions in the detection state of the device between the first detection state and the second detection state.

In Example 81, the subject matter of Example 79 or 80 can optionally further include triggering the predefined action of the device if the duration of the first time period and the duration of the second period match with one or more duration thresholds.

In Example 82, the subject matter of Example 80 can optionally include wherein the predefined series of one or more transitions is associated with the predefined action of the device.

In Example 83, the subject matter of Example 61 can optionally further include determining durations of one or more further time periods during which the device remains in the first detection state or the second detection state, and triggering the predefined actin of the device based on the duration of the first time period and the durations of the one or more further time periods.

In Example 84, the subject matter of Example 83 can optionally include wherein the triggering the predefined action of the device based on the duration of the first time period and the durations of the one or more further time periods includes comparing the duration of the first time period and the one or more further time periods to at least one predefined duration threshold, and triggering the predefined action of the device based on the comparison.

In Example 85, the subject matter of Example 84 can optionally include wherein the at least one predefined duration threshold is associated with a predefined series of one or more transitions in the detection state of the device.

In Example 86, the subject matter of Example 61 can optionally include wherein the triggering a predefined action of the device includes comparing the duration of the first time period to at least one predefined duration threshold, and triggering the predefined action based on the comparison.

In Example 87, the subject matter of Example 86 can optionally include wherein the at least one predefined duration threshold is associated with a predefined series of one or more transitions in the detection state of the device.

In Example 88, the subject matter of Example 87 can optionally include wherein the at least one predefined duration threshold is the duration in time between a first transition and a second transition in the predefined series of one or more transitions.

In Example 89, the subject matter of Example 61 can optionally include wherein the triggering the predefined action of the device includes triggering the predefined action of the device further based on whether identification information of the external near field communication device matches identification information stored in a memory.

In Example 90, the subject matter of Example 61 can optionally include wherein the first detection state is a detection state in which the external near field communication device is not detected by the near field communication antenna, and wherein the second detection state is a detection state in which the external near field communication device is detected by the near field communication antenna.

In Example 91, the subject matter of Example 61 can optionally include wherein the first detection state is a detection state in which the external near field communication device is detected by the near field communication antenna, and wherein the second detection state is a detection state in which the external near field communication device is not detected by the near field communication antenna.

In Example 92, the subject matter of Example 61 can optionally include wherein the external near field communication device is located on the finger of a user.

Example 93 is a device. The device includes a near field communication antenna configured to detect an external near field communication device, and a processor configured to detect a transition in detection state of the device from a first detection state to a second detection state, wherein the transition in detection state of the device is based on whether the near field communication antenna detects the external near field communication device, control the device to operate according to a first operation mode during a first time period before the transition in which the device remains in the first detection state, and control the device to operate according to a second operation mode during a second time period after the transition once the device transitions from the first detection state to the second detection state.

In Example 94, the subject matter of Example 93 can optionally include wherein the processor is configured to control the device to operate according to the second operation mode immediately upon detecting the transition in detection state from the first detection state to the second detection state.

In Example 95, the subject matter of Example 93 can optionally include wherein the processor is further configured to detect a further transition in detection state of the device from the second detection state to the first detection state, and control the device to operate according to the first operation mode during a third time period after the further transition.

In Example 96, the subject matter of Example 95 can optionally include wherein the processor is configured to control the device to operate according to the first operation mode for the entire duration of the first time period.

In Example 97, the subject matter of Example 95 or 96 can optionally include wherein the processor is configured to control the device to operate according to the second operation mode for the entire duration of the second time period.

In Example 98, the subject matter of Example 93 can optionally include wherein the processor is configured to control the device to operate according to the first operation mode for the entire duration of the first time period.

In Example 99, the subject matter of Example 93 can optionally include wherein the first operation mode is a first type of character text entry and the second operation mode is a second type of character text entry different from the first type of character text entry.

In Example 100, the subject matter of Example 99 can optionally include wherein the first operation mode is uppercase character text entry and the second operation mode is lowercase character text entry, or wherein the first operation mode is lowercase character text entry and the second operation mode is uppercase character text entry.

In Example 101, the subject matter of Example 93 can optionally include wherein the first operation mode is a first type of scrolling operation, and wherein the second operation mode is a second type of scrolling operation different from the first type of scrolling operation.

In Example 102, the subject matter of Example 101 can optionally include wherein the first operation mode is selected from a scrolling type group consisting of a scroll up operation, a scroll down operation, and a no scrolling operation, and wherein the second operation mode is selected from the scrolling type group consisting of a scroll up operation, a scroll down operation, and a no scrolling operation.

In Example 103, the subject matter of Example 93 can optionally include wherein the external near field communication device is located on the finger of a user.

In Example 104, the subject matter of Example 93 can optionally include wherein the processor is further configured to receive first identification information of the external near field communication device, and perform a comparison between the first identification information and second identification information.

In Example 105, the subject matter of Example 104 can optionally include wherein the processor is configured to control the device to operate according to the first operation mode and control the device to operate according to the second operation mode based on the comparison.

In Example 106, the subject matter of Example 105 can optionally include wherein the processor is configured to control the device to operate according to the first operation mode and control the device to operate according to the second operation mode if the first identification information matches the second identification information.

In Example 107, the subject matter of Example 104 can optionally further include a memory configured to store the second identification information.

In Example 108, the subject matter of Example 107 can optionally include wherein the memory is configured to store further identification information, and wherein the device is configured to perform a comparison between the first identification information and the further identification information.

In Example 109, the subject matter of Example 108 can optionally include wherein the processor is configured to control the device to operate according to the first operation mode and control the device to operate according to the second operation mode if the first identification information matches the further identification information.

In Example 110, the subject matter of Example 93 can optionally include wherein the first detection state corresponds to the near field communication antenna being unable to detect the external near field communication device.

In Example 111, the subject matter of Example 93 can optionally include wherein the second detection state corresponds to the near field communication antenna being unable to detect the external near field communication device.

Example 112 is a method for controlling a device. The method includes detecting a transition in detection state of the device from a first detection state to a second detection state, wherein the detection state of the device is based on whether a near field communication antenna of the device detects an external near field communication device, controlling the device to operate according to a first operation mode during a first time period before the transition in which the device remains in the first detection state, and controlling the device to operate according to a second operation mode during a second time period after the transition once the device transitions from the first detection state to the second detection state.

In Example 113, the subject matter of Example 112 can optionally include wherein the controlling the device to operate according to the second operation mode includes controlling the device to operate according to the second operation mode immediately upon detecting the transition in detection state from the first detection state to the second detection state.

In Example 114, the subject matter of Example 112 can optionally further include detecting a further transition in detection state of the device from the second detection state to the first detection state, and controlling the device to operate according to the first operation during a third time period after the further transition.

In Example 115, the subject matter of Example 114 can optionally further include controlling the device to operate according to the first operation mode for the entire duration of the first time period.

In Example 116, the subject matter of Example 114 or 115 can optionally further include controlling the device to operate according to the second operation mode for the entire duration of the second time period.

In Example 117, the subject matter of Example 112 can optionally further include controlling the device to operate according to the first operation mode for the entire duration of the first time period.

In Example 118, the subject matter of Example 112 can optionally include wherein the first operation mode is a pre-defined operation triggered by the device, and wherein the second operation mode is a different pre-defined operation triggered by the device.

In Example 119, the subject matter of Example 112 can optionally include wherein the first operation mode is a first type of character text entry and the second operation mode is a second type of character text entry different from the first type of character text entry.

In Example 120, the subject matter of Example 119 can optionally include wherein the first operation mode is uppercase character text entry and the second operation mode is lowercase character text entry, or wherein the first operation mode is lowercase character text entry and the second operation mode is uppercase character text entry.

In Example 121, the subject matter of Example 112 can optionally include wherein the first operation mode is a first type of scrolling operation, and wherein the second operation mode is a second type of scrolling operation different from the first type of scrolling operation.

In Example 122, the subject matter of Example 121 can optionally include wherein the first operation mode is selected from a scrolling type group consisting of a scroll up operation, a scroll down operation, and a no scrolling operation, and wherein the second operation mode is selected from the scrolling type group consisting of a scroll up operation, a scroll down operation, and a no scrolling operation.

In Example 123, the subject matter of Example 112 can optionally include wherein the external near field communication device is located on the finger of a user.

In Example 124, the subject matter of Example 112 can optionally further include receiving first identification information of the external near field communication device, and performing a comparison between the first identification information and second identification information.

In Example 125, the subject matter of Example 124 can optionally include wherein the controlling the device to operate according to the first operation mode and the controlling the device to operate according to the second operation mode is based on the comparison.

In Example 126, the subject matter of Example 125 can optionally include wherein the controlling the device to operate according to the first operation mode and controlling the device to operate according to the second operation mode includes controlling the device to operate according to the first operation mode and controlling the device to operate according to the second operation mode if the first identification information matches the second identification information.

In Example 127, the subject matter of Example 124 can optionally further include storing the second identification information is stored on a memory of the device.

In Example 128, the subject matter of Example 127 can optionally further include storing further identification information on the memory, and performing a comparison between the first identification information and the further identification information.

In Example 129, the subject matter of Example 128 can optionally include wherein the controlling the device to operate according to the first operation mode and controlling the device to operate according to the second operation mode includes controlling the device to operate according to the first operation mode and controlling the device to operate according to the second operation mode if the first identification information matches the further identification information.

In Example 130, the subject matter of Example 112 can optionally include wherein the first detection state corresponds to the near field communication antenna being unable to detect the external near field communication device.

In Example 131, the subject matter of Example 112 can optionally include wherein the second detection state corresponds to the near field communication antenna being unable to detect the external near field communication device.

Example 132 is a device. The device includes a near field communication antenna configured to detect an external near field communication device. The device also include a monitor, a comparator, and a trigger. The monitor is configured to monitor a series of one or more transitions in a detection state of the device between a first detection state and a second detection state based on whether the near field communication antenna detects the near field communication device. The comparator is configured to perform a comparison between first timing information associated with the series of one or more transitions and second timing information associated with a first predefined series of one or more transitions. The trigger is configured to initiate a predefined action of the device based on the comparison.

Example 133 is a device. The device includes a near field communication antenna, a monitor, a detector, a determiner, and a trigger. The near field communication antenna configured to detect an external near field communication device. The detector is configured to change a detection state of the device from a first detection state to a second detection state based on whether the near field communication antenna detects the near field communication device. The determiner is configured to determine a duration of a first time period during which the device remains in the second detection state. The trigger is configured to initiate a predefined action of the device based on at least the duration of the first time period.

Example 134 is a device. The device includes a near field communication antenna, a detector, and a controller. The near field communication antenna is configured to detect an external near field communication device. The detector is configured to change a transition in detection state of the device from a first detection state to a second detection state, wherein the detection state of the device is based on whether the near field communication antenna detects the external near field communication device. The controller is configured to control the device to operate according a first operation mode during a first time period before the transition in which the device remains in the first detection state and control the device to operate according to a second operation mode during a second time period after the transition once the device transitions from the first detection state to the second detection state.

Example 135 is a method of operating a controllable electronic device. The method includes with NFC circuitry in the controllable electronic device, sensing movement of an NFC accessory relative to the controllable electronic device, with processing circuitry in the controllable electronic device, identifying the sensed movement of the NFC accessory as a given predefined movement in a database of predefined movements, wherein the database of predefined movements associates each predefined movement with a predefined action of the controllable electronic device, and with the processing circuity, triggering the predefined action associated, in the database, with the given predefined movement.

In Example 136, the subject matter of Example 135 can optionally include wherein the sensing movement of the NFC accessory relative to the controllable electronic device includes sensing user input.

In Example 137, the subject matter of Example 135 can optionally include wherein the sensing movement of the NFC accessory relative to the controllable electronic device includes sensing the NFC accessory entering a detection range of the NFC circuitry in the controllable electronic device.

In Example 138, the subject matter of Example 137 can optionally include wherein the sensing movement of the NFC accessory relative to the controllable electronic device includes sensing the NFC accessory leaving the detection range of the NFC circuitry in the controllable electronic device.

In Example 139, the subject matter of Example 137 can optionally further inclue, with the processing circuitry in the controllable electronic device, calculating a detected duration of time during which the NFC accessory remains within the detection range of the NFC circuitry in the controllable electronic device.

In Example 140, the subject matter of Example 139 can optionally include wherein the identifying the sensed movement of the NFC accessory as a given predefined movement in a database of predefined movements includes comparing the detected duration of time to a duration of time associated with at least one of the predefined movements in the databased of predefined movements.

In Example 141, the subject matter of Example 139 can optionally include wherein the sensing the NFC accessory entering a detection range of the NFC circuitry in the controllable electronic device includes detecting the NFC accessory crossing a detection threshold of the NFC circuitry.

In Example 142, the subject matter of Example 137 can optionally include wherein the sensing the NFC accessory entering a detection range of the NFC circuitry in the controllable electronic device includes detecting the NFC accessory crossing a detection threshold of an NFC antenna of the controllable electronic device.

In Example 143, the subject matter of Example 135 can optionally include wherein the controllable electronic device includes a handheld electronic device having a display on a front side and having an NFC antenna disposed on a back side.

In Example 144, the subject matter of Example 135 can optionally include wherein the external NFC accessory is disposed on a user's finger.

In Example 145, the subject matter of Example 135 can optionally include wherein the identifying the sensed movement of the NFC accessory as a given predefined movement in a database of predefined movements includes identifying that the sensed movement is substantially similar to the given predefined movement.

In Example 146, the subject matter of Example 145 can optionally include wherein the identifying the sensed movement of the NFC accessory as a given predefined movement in a database of predefined movements further includes identifying that the sensed movement is not substantially similar to one or more other predefined movements of the database of predefined movements.

In Example 147, the subject matter of Example 145 can optionally include wherein the identifying that the sensed movement is substantially similar to the given predefined movement includes utilizing fuzzy logic to identify whether or not the sensed movement is substantially similar to the given predefined movement.

In Example 148, the subject matter of Example 135 can optionally include wherein the identifying the sensed movement of the NFC accessory as a given predefined movement in a database of predefined movements includes determining a sensed waveform based on the sensed movement.

In Example 149, the subject matter of Example 148 can optionally include wherein the identifying the sensed movement of the NFC accessory as a given predefined movement in a database of predefined movements includes comparing the sensed waveform with one or more defined waveforms associated with the predefined movements in the database of predefined movements.

In Example 150, the subject matter of Example 148 can optionally further inclue, with a memory in the controllable electronic device, storing the database of predefined movements.

In Example 151, the subject matter of Example 150 can optionally include wherein the storing the database of predefined movements includes storing a designated waveform corresponding to each of the predefined movements in the memory.

In Example 152, the subject matter of Example 151 can optionally include wherein the identifying the sensed movement of the NFC accessory as a given predefined movement in a database of predefined movements includes comparing the sensed waveform with the designated waveforms corresponding to one or more of the predefined movements.

In Example 153, the subject matter of Example 135 can optionally further inclue with a memory in the controllable electronic device, storing the database of predefined movements.

In Example 154, the subject matter of Example 153 can optionally include wherein the storing the database of predefined movements includes storing a designated waveform corresponding to each of the predefined movements in the memory.

In Example 155, the subject matter of Example 149 can optionally include wherein the identifying the sensed movement of the NFC accessory as a given predefined movement in a database of predefined movements includes comparing the sensed waveform with the designated waveforms corresponding to one or more of the predefined movements.

In Example 156, the subject matter of Example 145 can optionally include wherein the identifying the sensed movement of the NFC accessory as a given predefined movement in a database of predefined movements includes identifying that the sensed movement is substantially similar to the given predefined movement based on timing information associated with the sensed movement and timing information associated with the predefined movements of the database of predefined movements.

In Example 157, the subject matter of Example 156 can optionally include wherein the timing information associated with the sensed movement and timing information associated with the predefined movements of the database of predefined movements includes one or more timestamps or one or more time period durations.

In Example 158, the subject matter of Example 157 can optionally include wherein the one or more timestamps include timepoints when the NFC accessory enters or leaves a detection range of the NFC circuitry.

In Example 159, the subject matter of Example 157 can optionally include wherein the one or more time periods durations include time windows in which the NFC accessory is within the detection range of the NFC circuitry or outside of the detection range of the NFC circuitry.

In Example 160, the subject matter of Example 135 can optionally include wherein the identifying the sensed movement of the NFC accessory as a given predefined movement in a database of predefined movements includes comparing timing information of the sensed movement to timing information of the predefined movements.

In Example 161, the subject matter of Example 160 can optionally include wherein the comparing timing information of the sensed movement to timing information of the predefined movements includes comparing one or more timestamps associated with the sensed movement to one or more timestamps associated with one or more of the predefined movements.

In Example 162, the subject matter of Example 161 can optionally include wherein the sensing movement of the NFC accessory relative to the controllable electronic device includes sensing one or detection timepoints at which the NFC accessory enters or leaves a detection range of the NFC circuitry.

In Example 163, the subject matter of Example 162 can optionally include wherein the one or more timestamps associated with the sensed movement are based on one or more of the one or more of the detection timepoints.

In Example 164, the subject matter of Example 135 can optionally include wherein the sensing movement of the NFC accessory relative to the controllable electronic device includes sensing one or detection timepoints in which NFC accessory enters or leaves a detection range of the NFC circuitry.

In Example 165, the subject matter of Example 164 can optionally include wherein the , identifying the sensed movement of the NFC accessory as a given predefined movement in a database of predefined movements includes deriving a sensed waveform based on the one or more detection timepoints.

In Example 166, the subject matter of Example 165 can optionally include wherein the identifying the sensed movement of the NFC accessory as a given predefined movement in a database of predefined movements includes comparing the sensed waveform to designated waveforms corresponding to one or more of the predefined movements.

In Example 167, the subject matter of Example 135 can optionally further inclue, with the NFC circuitry, reading identification information of the NFC accessory.

In Example 168, the subject matter of Example 167 can optionally include wherein the identifying the sensed movement of the NFC accessory as a given predefined movement in a database of predefined movements includes identifying the sensed movement of the NFC accessory as a given predefined movement in a database of predefined movements based on the identification information.

In Example 169, the subject matter of Example 135 can optionally include wherein a first predefined movement of the predefined movements is different from a second predefined movement of the predefined movements.

In Example 170, the subject matter of Example 169, wherein the first predefined movement is associated with a first spatial movement pattern of the of the NFC accessory relative to the controllable electronic device and the second predefined movement is associated with a second spatial movement pattern of the NFC accessory relative to the controllable electronic device.

In Example 171, the subject matter of Example 170 can optionally include wherein the first spatial movement pattern is different than the second spatial movement pattern.

In Example 172, the subject matter of Example 169 can optionally include wherein the first predefined movement is associated with one or more first timepoints when the NFC accessory enters or leaves a detection range of the NFC circuitry and the second predefined movement is associated with one or more second timepoints when the NFC accessory enters or leaves a detection range of the NFC circuitry.

In Example 173, the subject matter of Example 172 can optionally include wherein the one or more first timepoints are different than the one more second timpeoints.

In Example 174, the subject matter of Example 135 can optionally include wherein a first predefined movement of the predefined movements is associated with a first predefined action and a second predefined movement of the predefined movements is associated with a second predefined action.

In Example 175, the subject matter of Example 174 can optionally include wherein the first predefined action is different than the second predefined action.

In Example 176, the subject matter of Example 135 can optionally include wherein the sensed movement is associated with one or more sensed timepoints when the NFC accessory enters or leaves a detection range of the NFC circuitry and the given predefined movement is associated with one or more defined timepoints when the NFC accessory enters or leaves a detection range of the NFC circuitry.

In Example 177, the subject matter of Example 176 can optionally include wherein the identifying the sensed movement of the NFC accessory as a given predefined movement in a database of predefined movements includes identifying that the one or more sensed timepoints are substantially similar to the one or more defined timepoints.

In Example 178, the subject matter of Example 177 can optionally include wherein the identifying that the one or more sensed timepoints are substantially similar to the one or more defined timepoints includes utilizing fuzzy logic to identify whether the one or more sensed timepoints are substantially similar to the one or more defined timepoints.

In Example 179, the subject matter of Example 135 can optionally include wherein the processing circuitry includes an application processor, and wherein the triggering the predefined movement associated, in the database, with the given predefined movement includes executing the predefined action with the application processor.

In Example 180, the subject matter of Example 135 can optionally include wherein the controllable electronic device is a portable electronic device.

Example 181 is a device. The device includes a near field communication antenna and a processing circuit. The near field communication antenna is configured to detect an external near field communication device. The processing circuit is configured to monitor a series of one or more transitions in a detection state of the device between a first detection state and a second detection state based on whether the near field communication antenna detects the near field communication device, perform a comparison between first timing information associated with the series of one or more transitions and second timing information associated with a first predefined series of one or more transitions, and initiate a predefined action of the device based on the comparison.

While the invention has been particularly shown and described with reference to specific embodiments, it should be understood by those skilled in the art that various changes in form and detail may be made therein without departing from the scope of the invention as defined by the appended claims. The scope of the invention is thus defined by the appended independent claims. Preferred embodiments of the invention are stipulated in the dependent claims. While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

## Claims

1. A method of operating a controllable electronic device (200), the method comprising:
with NFC circuitry (202, 204) in the controllable electronic device (200), sensing movement of an NFC accessory (100) relative to the controllable electronic device (200), wherein sensing the movement of the NFC accessory (100) relative to the controllable electronic device (200) comprises sensing the NFC accessory (100) entering and sensing the NFC accessory (100) leaving a detection range of the NFC circuitry (204) in the controllable electronic device (200);
with processing circuitry (208) in the controllable electronic device (200), identifying the sensed movement of the NFC accessory (100) as a given predefined movement in a database of predefined movements based on comparing timing information of the sensed movement to timing information of the predefined movement, wherein the database of predefined movements associates each predefined movement with a predefined action of the controllable electronic device (200),
wherein a point in time in which the NFC accessory (100) leaves the detection range and a subsequent point in time in which the NFC accessory (100) enters the detection range subsequently to leaving the detection range are determined based on data received from the NFC circuitry (202, 204),
wherein the point in time in which the NFC accessory (100) leaves the detection range is an initial point in time of the sensed movement,
wherein the initial point in time and the subsequent point in time are successive points in time of the sensed movement,
wherein a duration (510) of time between the initial point in time and the subsequent point in time is determined,
wherein the timing information is compared based on comparing the duration (510) to durations associated with the predefined movements; and
with the processing circuitry (208), triggering the predefined action associated, in the database, with the given predefined movement.

2. The method of claim 1, wherein the comparing timing information of the sensed movement to timing information of the predefined movements comprises comparing one or more timestamps associated with the sensed movement to one or more timestamps associated with one or more of the predefined movements.

3. The method of claim 2, wherein the sensing movement of the NFC accessory (100) relative to the controllable electronic device (200) comprises sensing one or more detection timepoints at which the NFC accessory (100) enters or leaves a detection range of the NFC circuitry (202, 204).

4. The method of claim 3, wherein the one or more timestamps associated with the sensed movement are based on one or more of the one or more of the detection timepoints.

5. The method of claim 1, wherein the controllable electronic device (200) comprises a handheld electronic device having a display on a front side and having an NFC antenna (202) disposed on a back side.

6. A device (200) comprising:
a near field controller (204) configured to detect an external near field communication device (100) using a near field communication antenna (202);
a monitor (208, 1102) configured to monitor a series of transitions in a detection state of the device (200) between a first detection state (302, 802) and a second detection state (306, 806) based on whether the near field communication antenna (202) detects the near field communication device (100),
wherein the first detection state is a detection state in which the near field communication device (100) is within the detection range of the near field communication antenna (202), and wherein the second detection state is a detection state in which the near field communication device (100) is not within the detection range of the near field communication antenna (202),
wherein a point in time in which the near field communication device (100) leaves the detection range and a subsequent point in time in which the near field communication device (100) enters the detection range subsequently to leaving the detection range are determined based on data received from the near field controller (204),
wherein the point in time in which the near field communication device (100) leaves the detection range is an initial point in time of the series of transitions,
wherein the initial point in time and the subsequent point in time are successive points in time of the series of transitions,
wherein a duration (510) of time between the initial point in time and the subsequent point in time is determined;
a comparator (208, 1106) configured to perform a comparison between first timing information that comprises the duration (510) and is associated with the series of transitions and second timing information that is associated with a first predefined series of one or more transitions,
wherein the comparison between the first timing information and the second timing information is performed by comparing the duration (510) to durations of the second timing information; and
a trigger (1108) configured to initiate a predefined action of the device (200) based on the comparison.

7. The device (200) of claim 6, wherein the predefined series of one or more transitions is based on a spatial movement pattern of the external near field communication device (100) relative to the device (200).

8. The device (200) of claim 6, wherein the trigger (1108) is configured to initiate the predefined action if the first timing information matches the second timing information.

9. The device (200) of claim 8, wherein the predefined series of one or more transitions is associated with the predefined action of the device (200).

10. The device (200) of claim 6, wherein the comparator (208, 1106) is further configured to compare the first timing information with third timing information associated with a second predefined series of one or more transitions,
and wherein the trigger (1108) is further configured to initiate a further predefined action of the device (200) if the first timing information matches the third timing information.

11. The device (200) of claim 6, further comprising a memory (206) configured to store the second timing information and third timing information.

12. The device (200) of claim 11, wherein the memory (206) is further configured to store information associating the second timing information with the first predefined series of one or more transitions and information associating the third timing information with the second predefined series of one or more transitions.

13. The device (200) of claim 6, wherein the first timing information and second timing information each comprise one or more timestamps indicating a transition time between the first detection state (302, 802) and the second detection state (306, 806), and wherein the comparator (208, 1106) is configured to perform the comparison by comparing the one or more timestamps.

14. The device (200) of claim 6, further comprising an identifier configured to determine identification information of the external near field communication device (100),
and wherein the trigger (1108) is configured to initiate the predefined action of the device (200) further based on the identification information of the external near field communication device (100).

## Patentansprüche

1. Verfahren zum Betreiben einer steuerbaren elektronischen Vorrichtung (200), wobei das Verfahren umfasst:
Erfassen mit NFC-Schaltungsanordnung (202, 204) in der steuerbaren elektronischen Vorrichtung (200) von Bewegung eines NFC-Zubehörs (100) in Bezug auf die steuerbare elektronische Vorrichtung (200), wobei das Erfassen der Bewegung des NFC-Zubehörs (100) in Bezug auf die steuerbare elektronische Vorrichtung (200) ein Erfassen des Eintretens des NFC-Zubehörs (100) in einen Detektionsbereich der NFC-Schaltungsanordnung (204) in der steuerbaren elektronischen Vorrichtung (200) und Erfassen des Austretens des NFC-Zubehörs (100) aus demselben umfasst;
Identifizieren mit Verarbeitungsschaltungsanordnung (208) in der steuerbaren elektronischen Vorrichtung (200) der erfassten Bewegung des NFC-Zubehörs (100) als eine gegebene vordefinierte Bewegung in einer Datenbank von vordefinierten Bewegungen basierend auf einem Vergleichen von Zeitinformationen der erfassten Bewegung mit Zeitinformationen der vordefinierten Bewegung, wobei die Datenbank von vordefinierten Bewegungen jede vordefinierte Bewegung mit einer vordefinierten Aktion der steuerbaren elektronischen Vorrichtung (200) assoziiert,
wobei ein Zeitpunkt, zu welchem das NFC-Zubehör (100) aus dem Detektionsbereich austritt, und ein anschließender Zeitpunkt, zu welchem das NFC-Zubehör (100) nach dem Austreten aus dem Detektionsbereich in den Detektionsbereich eintritt, basierend auf Daten bestimmt werden, die von der NFC-Schaltungsanordnung (202, 204) empfangen werden,
wobei der Zeitpunkt, zu welchem das NFC-Zubehör (100) aus dem Detektionsbereich austritt, ein Anfangszeitpunkt der erfassten Bewegung ist,
wobei der Anfangszeitpunkt und der anschließende Zeitpunkt aufeinanderfolgende Zeitpunkte der erfassten Bewegung sind,
wobei eine Dauer (510) von Zeit zwischen dem Anfangszeitpunkt und dem anschließenden Zeitpunkt bestimmt wird,
wobei die Zeitinformationen basierend auf einem Vergleichen der Dauer (510) mit Dauern verglichen werden, die mit den vordefinierten Bewegungen assoziiert sind; und
Auslösen mit der Verarbeitungsschaltungsanordnung (208) der vordefinierten Aktion, die in der Datenbank mit der gegebenen vordefinierten Bewegung assoziiert ist.

2. Verfahren nach Anspruch 1, wobei das Vergleichen von Zeitinformationen der erfassten Bewegung mit Zeitinformationen der vordefinierten Bewegungen ein Vergleichen eines oder mehrerer Zeitstempel, die mit der erfassten Bewegung assoziiert sind, mit einem oder mehreren Zeitstempeln umfasst, die mit einer oder mehreren der vordefinierten Bewegungen assoziiert sind.

3. Verfahren nach Anspruch 2, wobei die erfasste Bewegung des NFC-Zubehörs (100) in Bezug auf die steuerbare elektronische Vorrichtung (200) ein Erfassen eines oder mehrerer Detektionszeitpunkte umfasst, zu welchen das NFC-Zubehör (100) in den Detektionsbereich der NFC-Schaltungsanordnung (202, 204) eintritt oder daraus austritt.

4. Verfahren nach Anspruch 3, wobei der eine oder die mehreren Zeitstempel, die mit der erfassten Bewegung assoziiert sind, auf einem oder mehreren des einen oder der mehreren der Detektionszeitpunkte basieren.

5. Verfahren nach Anspruch 1, wobei die steuerbare elektronische Vorrichtung (200) eine elektronische Handvorrichtung mit einer Anzeige auf einer Vorderseite und mit einer auf einer Rückseite angeordneten NFC-Antenne (202) umfasst.

6. Vorrichtung (200), umfassend:
eine Nahfeldsteuerung (204), die zum Detektieren einer externen Nahfeldkommunikationsvorrichtung (100) unter Verwendung einer Nahfeldkommunikationsantenne (202) konfiguriert ist;
eine Überwachungseinrichtung (208, 1102), die so konfiguriert ist, dass sie eine Reihe von Übergängen der Vorrichtung (200) in einen Detektionszustand zwischen einem ersten Detektionszustand (302, 802) und einem zweiten Detektionszustand (306, 806) auf der Basis dessen überwacht, ob die Nahfeldkommunikationsantenne (202) die Nahfeldkommunikationsvorrichtung (100) detektiert,
wobei der erste Detektionszustand ein Detektionszustand ist, in welchem die Nahfeldkommunikationsvorrichtung (100) innerhalb des Detektionsbereichs der Nahfeldkommunikationsantenne (202) ist, und der zweite Detektionszustand ein Detektionszustand ist, in welchem die Nahfeldkommunikationsvorrichtung (100) nicht innerhalb des Detektionsbereichs der Nahfeldkommunikationsantenne (202) ist,
wobei ein Zeitpunkt, zu welchem die Nahfeldkommunikationsvorrichtung (100) aus dem Detektionsbereich austritt, und ein anschließender Zeitpunkt, zu welchem die Nahfeldkommunikationsvorrichtung (100) nach dem Austreten aus dem Detektionsbereich in den Detektionsbereich eintritt, basierend auf Daten bestimmt werden, die von der Nahfeldsteuerung (204) empfangen werden,
wobei der Zeitpunkt, zu welchem die Nahfeldkommunikationsvorrichtung (100) aus dem Detektionsbereich austritt, ein Anfangszeitpunkt der Reihe von Übergängen ist,
wobei der Anfangszeitpunkt und der anschließende Zeitpunkt aufeinanderfolgende Zeitpunkte der Reihe von Übergängen sind,
wobei eine Dauer (510) von Zeit zwischen dem Anfangszeitpunkt und dem anschließenden Zeitpunkt bestimmt wird;
einen Komparator (208, 1106), der so konfiguriert ist, dass er einen Vergleich zwischen ersten Zeitinformationen, welche die Dauer (510) umfassen und mit der Reihe von Übergängen assoziiert sind, und zweiten Zeitinformationen durchführt, die mit einer ersten vordefinierten Reihe eines oder mehrerer Übergänge assoziiert sind,
wobei der Vergleich zwischen den ersten Zeitinformationen und den zweiten Zeitinformationen durch Vergleichen der Dauer (510) mit Dauern der zweiten Zeitinformationen durchgeführt wird; und
einen Auslöser (1108), der zum Initiieren einer vordefinierten Aktion der Vorrichtung (200) basierend auf dem Vergleich konfiguriert ist.

7. Vorrichtung (200) nach Anspruch 6, wobei die vordefinierte Reihe eines oder mehrerer Übergänge auf einem räumlichen Bewegungsmuster der externen Nahfeldkommunikationsvorrichtung (100) in Bezug auf die Vorrichtung (200) basiert.

8. Vorrichtung (200) nach Anspruch 6, wobei der Auslöser (1108) so konfiguriert ist, dass er die vordefinierte Aktion initiiert, wenn die ersten Zeitinformationen den zweiten Zeitinformationen entsprechen.

9. Vorrichtung (200) nach Anspruch 8, wobei die vordefinierte Reihe eines oder mehrerer Übergänge mit der vordefinierten Aktion der Vorrichtung (200) assoziiert ist.

10. Vorrichtung (200) nach Anspruch 6, wobei der Komparator (208, 1106) ferner so konfiguriert ist, dass er die ersten Zeitinformationen mit dritten Zeitinformationen vergleicht, die mit einer zweiten Reihe eines oder mehrerer Übergänge assoziiert sind,
und wobei der Auslöser (1108) ferner so konfiguriert ist, dass er eine weitere vordefinierte Aktion der Vorrichtung (200) initiiert, wenn die ersten Zeitinformationen den dritten Zeitinformationen entsprechen.

11. Vorrichtung (200) nach Anspruch 6, ferner umfassend einen Speicher (206), der zum Speichern der zweiten Zeitinformationen und dritten Zeitinformationen konfiguriert ist.

12. Vorrichtung (200) nach Anspruch 11, wobei der Speicher (206) ferner so konfiguriert ist, dass er Informationen, welche die zweiten Zeitinformationen mit der ersten vordefinierten Reihe eines oder mehrerer Übergänge assoziieren, und Informationen speichert, welche die dritten Zeitinformationen mit der zweiten vordefinierten Reihe eines oder mehrerer Übergänge assoziieren.

13. Vorrichtung (200) nach Anspruch 6, wobei die ersten Zeitinformationen und die zweiten Zeitinformationen jeweils einen oder mehrere Zeitstempel umfassen, die eine Übergangszeit zwischen dem ersten Detektionszustand (302, 802) und dem zweiten Detektionszustand (306, 806) angeben, und wobei der Komparator (208, 1106) zum Durchführen des Vergleichs durch Vergleichen des einen oder der mehreren Zeitstempel konfiguriert ist.

14. Vorrichtung (200) nach Anspruch 6, ferner umfassend eine Kennung, die zum Bestimmen von Identifikationsinformationen der externen Nahfeldkommunikationsvorrichtung (100) konfiguriert ist,
und wobei der Auslöser (1108) so konfiguriert ist, dass er die vordefinierte Aktion der Vorrichtung (200) ferner basierend auf den Identifikationsinformationen der externen Nahfeldkommunikationsvorrichtung (100) initiiert.

## Revendications

1. Procédé d'exploitation d'un dispositif électronique contrôlable (200), le procédé comprenant :
avec des circuits de communications en champ proche, NFC, (202, 204) dans le dispositif électronique contrôlable (200), la détection d'un mouvement d'un accessoire NFC (100) relativement au dispositif électronique contrôlable (200), dans lequel la détection du mouvement de l'accessoire NFC (100) relativement au dispositif électronique contrôlable (200) comprend la détection de l'entrée de l'accessoire NFC (100) dans une portée de détection des circuits NFC (204) dans le dispositif électronique contrôlable (200) et la sortie de l'accessoire NFC (100) de cette portée ;
avec des circuits de traitement (208) dans le dispositif électronique contrôlable (200), l'identification du mouvement détecté de l'accessoire NFC (100) en tant que mouvement prédéfini donné dans une base de données de mouvements prédéfinis sur la base d'une comparaison d'informations de synchronisation du mouvement détecté à des informations de synchronisation du mouvement prédéfini, dans lequel la base de données de mouvements prédéfinis associe chaque mouvement prédéfini à une action prédéfinie du dispositif électronique contrôlable (200),
dans lequel un instant auquel l'accessoire NFC (100) sort de la portée de détection et un instant suivant auquel l'accessoire NFC (100) entre dans la portée de détection pour sortir ensuite de la portée de détection sont déterminés sur la base de données reçues depuis les circuits NFC (202, 204),
dans lequel l'instant auquel l'accessoire NFC (100) sort de la portée de détection est un instant initial du mouvement détecté,
dans lequel l'instant initial et l'instant suivant sont des instants successifs du mouvement détecté,
dans lequel une durée (510) de temps entre l'instant initial et l'instant suivant est déterminée,
dans lequel les informations de synchronisation sont comparées sur la base d'une comparaison de la durée (510) à des durées associées aux mouvements prédéfinis ; et
avec les circuits de traitement (208), le déclenchement de l'action prédéfinie associée, dans la base de données, au mouvement prédéfini donné.

2. Procédé selon la revendication 1, dans lequel la comparaison d'informations de synchronisation du mouvement détecté à des informations de synchronisation des mouvements prédéfinis comprend la comparaison d'une ou plusieurs estampilles temporelles associées au mouvement détecté à une ou plusieurs estampilles temporelles associées à un ou plusieurs des mouvements prédéfinis.

3. Procédé selon la revendication 2, dans lequel la détection du mouvement de l'accessoire NFC (100) relativement au dispositif électronique contrôlable (200) comprend la détection d'un ou plusieurs instants auxquels l'accessoire NFC (100) entre dans une portée de détection des circuits NFC (202, 204) ou sort de cette portée.

4. Procédé selon la revendication 3, dans lequel les plusieurs estampilles temporelles associées au mouvement détectée sont basées sur un ou plusieurs des un ou plusieurs instants de détection.

5. Procédé selon la revendication 1, dans lequel le dispositif électronique contrôlable (200) comprend un dispositif électronique portable présentant un afficheur sur une face frontale et une antenne NFC (202) disposée sur une face arrière.

6. Dispositif (200) comprenant :
un contrôleur de champ proche (204) configuré pour détecter un dispositif de communication en champ proche externe (100) au moyen d'une antenne de communication en champ proche (202) ;
un dispositif de surveillance (208, 1102) configuré pour surveiller une série de transitions d'un état de détection du dispositif (200) entre un premier état de détection (302, 802) et un second état de détection (306, 806) selon que l'antenne de communication en champ proche (202) détecte ou non le dispositif de communication en champ proche (100),
dans lequel le premier état de détection est un état de détection dans lequel le dispositif de communication en champ proche (100) se trouve dans la portée de détection de l'antenne de communication en champ proche (202), et dans lequel le second état de détection est un état de détection dans lequel le dispositif de communication en champ proche (100) se trouve hors de la portée de détection de l'antenne de communication en champ proche (202),
dans lequel un instant auquel le dispositif de communication en champ proche (100) sort de la portée de détection et un instant suivant auquel le dispositif de communication en champ proche (100) entre dans la portée de détection pour sortir ensuite de la portée de détection sont déterminés sur la base de données reçues depuis le contrôleur en champ proche (204), dans lequel l'instant auquel le dispositif de communication en champ proche (100) sort de la portée de détection est un instant initial de la série de transitions,
dans lequel l'instant initial et l'instant suivant sont des instants successifs de la série de transitions,
dans lequel une durée (510) de temps entre l'instant initial et l'instant suivant est déterminée ;
un comparateur (208, 1106) configuré pour réaliser une comparaison entre des premières informations de synchronisation qui comprennent la durée (510) et sont associées à la série de transitions et des deuxièmes informations de synchronisations qui sont associées à une première série prédéfinie d'une ou plusieurs transitions,
dans lequel la comparaison entre les premières informations de synchronisation et les deuxièmes informations de synchronisation est réalisé en comparant la durée (510) à des durées des deuxièmes informations de synchronisation; et
un déclencheur (1108) configuré pour lancer une action prédéfinie du dispositif (200) sur la base de la comparaison.

7. Dispositif (200) selon la revendication 6, dans lequel la série prédéfinie d'une ou plusieurs sessions est basée sur un motif de mouvement spatial du dispositif de communication en champ proche externe (100) relativement au dispositif (200).

8. Dispositif (200) selon la revendication 6, dans lequel le déclencheur (1108) est configuré pour lancer l'action prédéfinie si les premières informations de synchronisation correspondent aux deuxièmes informations de synchronisation.

9. Dispositif (200) selon la revendication 8, dans lequel la série prédéfinie d'une ou plusieurs transitions est associée à l'action prédéfinie du dispositif (200).

10. Dispositif (200) selon la revendication 6, dans lequel le comparateur (208, 1106) est configuré en outre pour comparer les premières informations de synchronisation à des troisièmes informations de synchronisation associées à une seconde série prédéfinie d'une ou plusieurs transitions, et dans lequel le déclencheur (1108) est configuré en outre pour lancer une action supplémentaire prédéfinie du dispositif (200) si les premières informations de synchronisation correspondent aux troisièmes informations de synchronisation.

11. Dispositif (200) selon la revendication 6, comprenant en outre une mémoire (206) configurée pour mémoriser les deuxièmes informations de synchronisation et les troisièmes informations de synchronisation.

12. Dispositif (200) selon la revendication 11 , dans lequel la mémoire (206) est configurée en outre pour mémoriser des informations associant les deuxièmes informations de synchronisation à la première série prédéfinie d'une ou plusieurs transitions et des informations associant les troisièmes informations de synchronisation à la seconde série prédéfinie d'une ou plusieurs transitions.

13. Dispositif (200) selon la revendication 6, dans lequel les premières informations de synchronisation et les deuxièmes informations de synchronisation comprennent chacune une ou plusieurs estampilles temporelles indiquant un temps de transition entre le premier état de détection (302, 802) et le second état de détection (306, 806), et dans lequel le comparateur (208, 1106) est configuré pour réaliser la comparaison en comparant les une ou plusieurs estampilles temporelles.

14. Dispositif (200) selon la revendication 6, comprenant en outre un identifiant configuré pour déterminer des informations d'identification du dispositif de communication en champ proche externe (100), et dans lequel le déclencheur (1108) est configuré pour lancer l'action prédéfinie du dispositif (200) sur la base en outre des informations d'identification du dispositif de communication en champ proche externe (100).
